(19) Europäisches Patentamt
European Patent Office
Office européen des brevets

(11) **EP 1 001 409 A2**

(12) **EUROPEAN PATENT APPLICATION**

(43) Date of publication:
**17.05.2000 Bulletin 2000/20**

(51) Int. Cl.[7]: **G11B 7/007**, G11B 7/0037,
G11B 27/19
// G11B7/26, G11B19/247

(21) Application number: **99122337.1**

(22) Date of filing: **09.11.1999**

(84) Designated Contracting States:
**AT BE CH CY DE DK ES FI FR GB GR IE IT LI LU
MC NL PT SE**
Designated Extension States:
**AL LT LV MK RO SI**

(30) Priority: **09.11.1998 JP 31780098**

(71) Applicant: **SONY CORPORATION
Tokyo (JP)**

(72) Inventors:
• **Toru, Takeda
  Shinagawa-ku, Tokyo (JP)**
• **Satoshi, Kumai
  Shinagawa-ku, Tokyo (JP)**
• **Tatsuo, Mikami
  Shinagawa-ku, Tokyo (JP)**
• **Syuji, Uehara
  Shinagawa-ku, Tokyo (JP)**
• **Toshiharu, Okanishi
  Shinagawa-ku, Tokyo (JP)**
• **Ogawa, Kenji
  Shinagawa-ku, Tokyo (JP)**
• **Nishida, Norio
  Shinagawa-ku, Tokyo (JP)**
• **Sato, Shoji
  Shinagawa-ku, Tokyo (JP)**
• **Ishikawa, Hideki
  Shinagawa-ku, Tokyo (JP)**
• **Munekata, Kazumi
  Shinagawa-ku, Tokyo (JP)**
• **Yanamoto, Kaoru
  Shinagawa-ku, Tokyo (JP)**
• **Mine, Norichika
  Shinagawa-ku, Tokyo (JP)**

(74) Representative:
**Körber, Martin, Dipl.-Phys. et al
Mitscherlich & Partner
Patentanwälte
Sonnenstrasse 33
80331 München (DE)**

(54) **Disc recording medium, recording apparatus and playback apparatus**

(57)     Disclosed herein are a disc recording medium (1), a recording apparatus and a playback apparatus, more concretely, the present invention provides a disc recording medium (1) wherein a circular track is created in advance to be used for recording data as a groove (GV) or a land (L), said track is wobbled to contain approximately fixed number of wobbling periods as counted in a longitudinal direction of said track, and said track includes rotational-angle marks each showing a predetermined rotational angular position on said disc recording medium. As a result, the precision and the reliability of recording can be attained.

FIG.3

Lw = 4.725μm
= 36.000T
T = 0.1313
N = 31968.0

EP 1 001 409 A2

**Description**

BACKGROUND OF THE INVENTION

In general, the present invention relates to a disc recording medium, a recording apparatus and a playback apparatus. More particularly, the present invention relates to a disc recording medium, such as an optical disc, with each track thereof wobbled to form a pre-groove.

In order to recorded data onto a disc, a means of guiding a recording head along a data track is required. For this reason, grooves are created in advance as pre-grooves. The grooves and lands are used as data tracks in general. A land is a cross-sectional base member sandwiched by two adjacent grooves.

It is also necessary to record address information which indicates predetermined positions on a data track so that data can be recorded on the track. Such address information is recorded by wobbling the grooves in some cases.

That is to say, a track on which data is recorded is created typically as a pre-groove in advance. The side walls of the pre-groove are wobbled to represent address information.

To put it concretely, the side walls are each wobbled according to a waveform obtained as a result of modulation of the predetermined frequency of a carrier by using an address.

By wobbling the side walls in this way, an address can be fetched from wobbling information obtained as information conveyed by a reflected beam during a recording or playback operation. By providing wobbling information on the side walls as described above, data can be recorded and played back into and from predetermined positions on a track, even if pit data representing addresses is not formed on the track in advance.

By adding address information as wobbling grooves in this way, it is no longer necessary to provide discrete address areas on a track and record addresses in the address areas typically as pit data. Thus, the capacity of recording real data can be increased by a size which is as large as address areas becoming unnecessary.

Requirements to be satisfied by the disc and the recording/playback apparatus described above include improved reliability of recording and playback operations and an increased recording capacity. In addition, the operation of the recording/playback apparatus can be requested through a procedure which is as simple as possible, so that the configuration of the recording/playback apparatus can be simplified.

Since address areas are no longer necessary in a disc having wobbling grooves, the recording capacity can be increased readily. However, wobbles of adjacent tracks interferes each other so that beats are added to extracted wobbling information, raising a problem of a lack of accuracy in a demodulated address. This problem is a hindrance to the accuracy of an operation to record or play back data. In addition, for this reason, the track pitch can not be reduced below a certain value, imposing an upper limit on the recording capacity.

SUMMARY OF THE INVENTION

It is thus an object of the present invention addressing the problems described above to provide a new optical recording medium and a recording apparatus as well as a playback apparatus for recording and playing back data onto and from the optical recording medium respectively.

In order to achieve the object described above, the present invention provides a disc recording medium with wobbled circumferential tracks created thereon in advance wherein data is recorded on the tracks as grooves, lands or the combination of grooves and lands. The wobbling waveform of the tracks has the number of wobbling periods arranged at approximately constant linear density where a wobbling period is a portion of the waveform corresponding to a period. In addition, rotational-angle mark information indicating predetermined rotational angular positions on the disc is formed on the disc.

Wobbling with a constant linear density means that it is possible to generate a recording clock signal and a playback clock signal for data recorded at a constant linear density from wobbling information obtained from such a wobbled state.

In addition, a rotational-angle mark is used as control information for carrying out rotation at a fixed angular speed.

In the disc recording medium provided by the present invention, wobbling waveforms of two tracks adjacent to each other have a phase relation determined by a rotational angular position. For example, at a specific rotational angular position such as a rotational angular position of 0° or at a 12-o'clock position of a clock, the difference in phase between the wobbling waveforms of two tracks adjacent to each other is 0°, 180°, 90° or 270°. The two waveforms having a phase difference of 0° are said to be waveforms having the same phase. On the other hand, the two waveforms having a phase difference of 180° are said to be waveforms having opposite phases.

The number of wobbling-wave periods in a track circle is an integer or an integer + 0.5.

Let the number of wobbling-wave periods in the circle of a specific track be N. In this case, the number of wobbling-wave periods in the circle of an adjacent track on the outer side of the specific track is N + (m/4) where the symbol m is an integer.

By setting the number of wobbling-wave period in this way, wobbling waveforms of two tracks adjacent to each other can be formed to have a phase relation determined by a rotational angular position as described above.

In the case of wobbling waveforms of two tracks adjacent to each other having a phase relation determined by a rotational angular position, rotational-angle marks are added to all the tracks. To put it in detail, rotational-angle marks are added at positions which have a smallest effect on wobbling information.

A recording apparatus provided by the present invention has a head means capable of extracting information from a beam reflected by a disc recording medium and recording data onto the disc recording medium; a rotation driving means for extracting information on a rotational-angle mark on a track from information conveyed by a reflected beam, generating a rotation control signal and driving the disc recording medium into rotation at a constant angular speed; a recording-clock generating means for generating a recording clock signal based on wobbling information of a track extracted from the information conveyed by the reflected beam; and a recording-data processing means for encoding data, supplying the encoded data to the head means to be recorded onto the disc recording medium on the basis of the recording clock signal.

By using the recording medium provided by the present invention as described above, high-precision recording can be implemented.

In addition, the playback apparatus provided by the present invention has a head means capable of extracting information from a beam reflected by a disc recording medium; a rotation driving means for extracting information on a rotational-angle mark on a track from information conveyed by a reflected beam, generating a rotation control signal and driving the disc recording medium into rotation at a constant angular speed; a playback-clock generating means for generating a playback clock signal based on wobbling information of a track extracted from the information conveyed by the reflected beam; and a data-playback processing means for decoding data extracted from the information conveyed by the reflected beam on the basis of the playback clock signal and outputting the decoded data.

By using the recording medium provided by the present invention as described above, a high-precision playback operation can be carried out.

BRIEF DESCRIPTION OF THE DRAWINGS

Fig. 1 is an explanatory diagram showing specifications set for a disc implemented by an embodiment of the present invention;
Fig. 2 is an explanatory diagram showing typical specifications of a variety of discs implemented by embodiments of the present invention;
Fig. 3 is an explanatory diagram showing a first typical disc implemented by an embodiment of the present invention;
Figs. 4A through 4C are explanatory diagrams showing a variety of wobbling waveforms and a variety of fine-clock-mark waveforms of an embodiment of the present invention;
Figs. 5A through 5D are explanatory diagrams showing phase relations between a variety of wobbling waveforms and a variety of fine-clock-mark waveforms of an embodiment of the present invention;
Fig. 6 is an explanatory diagram showing fine clock marks added to a disc implemented by an embodiment of the present invention;
Fig. 7 is an explanatory diagram showing wobble counts of a first disc example in an embodiment of the present invention;
Fig. 8 is an explanatory diagram showing a second disc example in an embodiment of the present invention;
Fig. 9 is an explanatory diagram showing wobble counts of the second disc example in an embodiment of the present invention;
Fig. 10 is an explanatory diagram showing a third disc example in an embodiment of the present invention;
Fig. 11 is an explanatory diagram showing a fourth disc example in an embodiment of the present invention;
Fig. 12 is an explanatory diagram showing a fifth disc example in an embodiment of the present invention;
Fig. 13 is an explanatory diagram showing wobble counts of the fifth disc example in an embodiment of the present invention;
Fig. 14 is an explanatory diagram showing fine clock marks added to a disc implemented by an embodiment of the present invention;
Fig. 15 is an explanatory diagram showing a sixth disc example in an embodiment of the present invention;
Fig. 16 is an explanatory diagram showing a seventh disc example in an embodiment of the present invention;
Fig. 17 is an explanatory diagram showing a eighth disc example in an embodiment of the present invention;
Fig. 18 is an explanatory diagram showing a ninth disc example in an embodiment of the present invention;
Fig. 19 is an explanatory diagram showing another form of fine clock marks provided by an embodiment of the present invention;
Fig. 20 is an explanatory diagram showing still another form of fine clock marks provided by an embodiment of the present invention;
Fig. 21 is a block diagram showing a cutting apparatus for fabricating discs implemented by the embodiments of the present invention;

Fig. 22 is a block diagram showing a recording/playback apparatus implemented by the embodiments of the present invention;

Figs. 23A and 23B are explanatory diagrams showing a wobble groove of a track; and

Fig. 24A and 24B are explanatory diagrams showing dimensions of a wobble groove of a track.

DESCRIPTION OF THE PREFERRED EMBODIMENTS

The following description explains optical discs implemented by some preferred embodiments of the present invention as well as a cutting apparatus for cutting the discs and a recording/playback apparatus for the discs in the following order:

1. Wobbling Tracks of an Optical Disc
2. Requirements of the Discs Implemented by the Embodiments
3. First Disc Example
4. Second Disc Example
5. Third Disc Example
6. Fourth Disc Example
7. Fifth Disc Example
8. Sixth Disc Example
9. Seventh Disc Example
10. Eighth Disc Example
11. Ninth Disc Example
12. Other Examples of Rotational-Angle Marks
13. Cutting Apparatus
14. Recording/Playback Apparatus

1. Wobbling Tracks of an Optical Disc

The description begins with physical characteristics and wobbling tracks of a disc implemented by an embodiment.

The disc implemented by the present embodiment is an optical disc on which data is recorded in accordance with a phase change system. The disc has a diameter of 120 mm.

The disc comprises two substrates, each of which have a disk thickness (substrate thickness) of 0.6 mm and are stuck to each other to give a total disc thickness of 1.2 mm. As a disc clamping technique, a mechanical method is adopted. The external appearance of the disc is similar to those of a CD (Compact Disc), a DVD-ROM (Digital Versatile Disc-ROM/Digital Video Disc-ROM or Digital Video Disc-ROM) or the like.

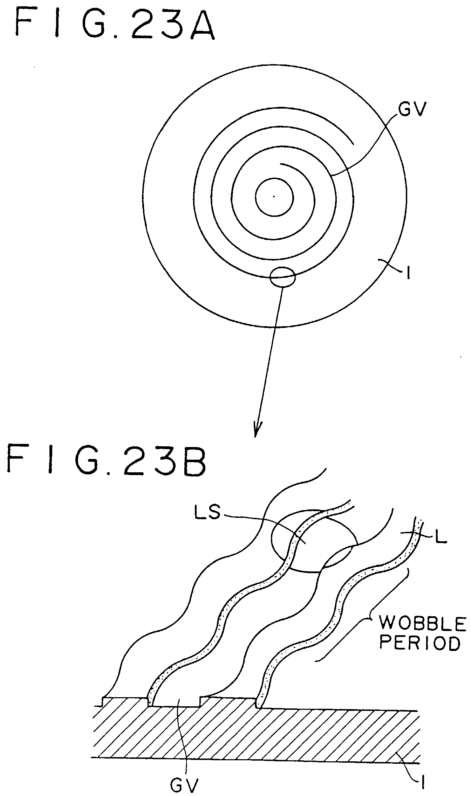

On a disc, grooves each serving as a track are formed in advance. Physical addresses are provided to the tracks by wobbling the grooves. To put it in detail, a pre-groove GV is created in advance to form a spiral from an inner circumference to an outer circumference as shown in a modeling diagram of Fig. 23A. It is needless to say that the pre-groove GV can also be created to form a concentric circles.

Fig. 23B is an enlarged diagram showing a portion of the pre-groove GV. As shown in the figure, the right and left side walls of the groove are wobbled in accordance with address information. To be more specific, the walls are wobbled at a predetermined period determined by a wobbling signal generated on the basis of the address information. An area between a specific groove GV and another groove GV adjacent to the specific groove GV is used as a land L. Data is recorded on a groove GV. That is to say, a groove GV serves as a data track. Note that it is also conceivable to use a land L as a data track for recording data thereon, or to use both a groove GV and a land L as data tracks.

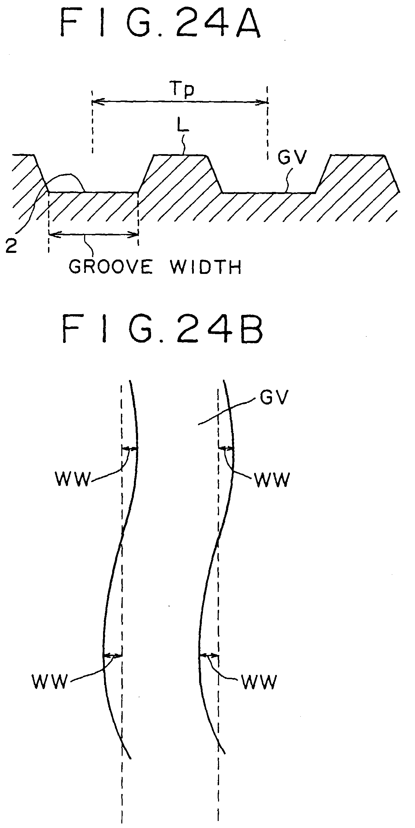

When a groove GV is used as a data track as is the case with the embodiment, a track pitch Tp is defined as a distance between the center of a specific groove GV and the center of another groove GV adjacent to the specific groove GV as shown in Fig. 24A. The track pitch Tp has a typical value of about 0.74 $\mu$m. It should be noted that the track pitch Tp can have a variety of possible values which will be described in a later explanation of disc examples.

The width of a groove GV which is defined as the groove width of the bottom surface of the groove GV has a typical value of about 0.48 $\mu$m. Thus, the width of a groove Gv is greater than the width of a land L.

The depth of a groove GV is $\lambda/8$ where $\lambda$ is the wavelength of a laser used for recording and playback operations.

It should be noted that the wavelength $\lambda$ of a laser used in the recording/playback apparatus is 650 nm (- 5/+ 15 nm). The numerical aperture NA of the optical head employed in the recording/playback apparatus is set at 0.6.

As shown in Fig. 23B, the groove GV is wobbled. The amount of wobbling is prescribed as a wobble amplitude WW shown in Fig. 24B.

In the disc 1 implemented by this embodiment, the wobble amplitude WW is set at 12.5 nm. It should be noted that the amount of wobbling increases instantly at certain periodical intervals on the groove GV. The increase in wobbling amount is referred to as a fine clock mark FCM to be described later. At a position of such an increase, the wobble amplitude WW has a value in the range of 25 to 30 nm.

A wobbling groove is a characteristic of the present invention which will be described later. The groove is wobbled by a signal completing PM (Phase Modulation) modulation based on addresses. Thus, by carrying out PM demodulation on information played back from the groove, an absolute address can be extracted.

In addition, the disc is driven into rotation by a CAV (Constant Angular Velocity) system. However, the number of wobbling periods of a groove, that is, the number of wobbling periods in the carrier, is determined not to provide CAV but to provide a CLD (Constant Linear Density), that is, an approximately fixed number of wobbling periods over a predetermined length in the longitudinal direction of a track. As such, the wobbling groove has a CLD. That is to say, the carrier period of a wobbling waveform in the track-line direction is fixed. Fine clock marks are added to the wobbling groove each to serve as a CAV reference. To put it in detail, fine clock marks each indicating a rotational angular position are added at the specific rotational angular positions on all tracks along lines over the tracks in radial directions as will be described in detail later.

Data is recorded on this optical disc at a CLD (Constant Linear Density) of typically 0.35 µm/bit.

As a technique to modulate recording data, the 8-16 modulation is adopted as is the case with a so-called DVD. With this technique, mark-edge recording is carried out on the phase-change recording medium.

The physical characteristics described above are determined in accordance with a recording/playback system using this disc.

A recording/playback system intended by the present invention allows CLD data to be recorded and played back onto and from a disc which is rotated at a CAV (Constant Angular Velocity). For this reason, the disc implemented by this embodiment has carrier periods of each wobbling groove laid out at a CLD and fine clock marks added thereto as marks each indicating a specific rotational angular position which serves as a CAV reference.

In addition, by setting the number of carrier periods on a wobbling groove at a CLD, a highly accurate recording clock signal and a highly accurate playback clock signal can be generated from information extracted from a wobbling groove as will be described in an explanation of a recording/playback apparatus given later. Moreover, the existence of marks each indicating a specific rotational angular position used as a CAV reference makes it possible to implement highly accurate and easy CAV rotation control by using information obtained from the disc itself.

Furthermore, the disc implemented by this embodiment can be played back by using a existing DVD-ROM player.

2. Requirements of the Discs Implemented by the Embodiments

In the present invention, not only are carrier periods merely provided on each wobbling pre-groove at a CLD and not only are fine clock marks each indicating specific rotational angular positions used as a CAV reference merely added, but a groove wobbling period is also set, aiming at a high-precision recording/playback capability.

To put it concretely, a wobbling period is determined with the following requirement set as an objective.

At a specific rotational angular position on two tracks adjacent to each other, the phase relation between wobbling waveforms of the tracks is fixed, so that the rotational angular position is formed therebetween.

For example, at a specific rotational angular position on two tracks adjacent to each other, the difference in phase between wobbling waveforms of the tracks is fixed at 0°, 180°, 90° or 270°.

Assume that the start point of each circumferential track is taken as a rotational angular position of 0° or the 12 o'clock position of a clock. In this case, at this 0° rotational angular position, the difference in phase between two tracks adjacent to each other is fixed.

That is to say, by providing wobbling wave periods at a CLD and setting a fixed difference in phase between wobbling waveforms at a specific rotational angular position as described above, the amount of interference or the number of beats between two tracks adjacent to each other can be reduced to a minimum. Thus, the recording/playback apparatus is capable of fetching wobbling information with a high degree of precision.

In addition, by adding a fine clock mark at a rotational angular position with a fixed phase difference of 0°, 180°, 90° or 270°, it is possible to minimize deterioration in information precision caused by mutual interference of a wobbling groove and a fine clock mark.

For the reason described above, the number of wobbling-wave periods on a track circle is set at an integer or an integer + 0.5. Also referred to hereafter simply as a wobble count, the number of wobbling-wave periods is expressed in terms of wobbling periods.

Let the number of wobbling-wave periods in the circle of a specific track be N. In this case, the number of wobbling-wave periods in the circle of an adjacent track on the outer side of the specific track is N + (m/4) where the symbol m is an integer. That is to say, as the head moves toward an outer circumference by one track, the number of wobbling-wave periods in the circle of a track is increased by m/4.

A variety of discs to be described later are made by taking these into consideration. First of all, the basis for selecting the value of the wobbling period for each of the discs is described as follows.

Consider a circular track starting from a rotational angular position of 0° and assume that the wobbling phase at this 0° rotational angular position is 0°. In this case, if the number of wobbling periods included in a track circle, that is, the number of carrier periods expressed in terms of wobbling periods, is an integer, the wobbling phase at the start point of the next track is also 0°. That is to say, the difference in phase between two wobbling tracks adjacent to each other at a rotational angular position of 0° is 0°.

As the head moves on to an outer circumference, tracing one track after another, the number of wobbling periods included in a track circle increases by an integer each time a track is traced. Thus, the wobble count of each track is an integer and, at a rotational angular position of 0° on the disc, the difference in phase between any wobbling tracks in the radial direction is 0° .

A difference Δ in total length between any specific track and another track adjacent to the specific track on the outer side of the specific track is expressed as follows:

$$\Delta = 2\pi \cdot Tp$$

where the symbol Tp represents the track pitch and π is 3.1416 • • •.

Thus, any specific track laid on outer side is longer than another track adjacent to the specific track on the inner side of thereof by Δ for all tracks on the disc.

Terefore, if the wobbling wavelength is set at a value equal to the increase Δ in total length, the wobble count of each track is an integer and, as the head moves on to an outer circumference, tracing one track after another, the number of wobbling periods included in a track circle increases by 1, an integer, each time a track is traced.

In another embodiment in which the wobbling period is set in accordance with the increase Δ in total length, the wobble count of a track circle is set at an integer or an integer plus 0.5 and, as the head moves on to an outer circumference, tracing one track after another, the wobble count in each track increases by m/4, where m = 1, 2, 3, 4, 5 and so on, each time a track is traced. In this way, at a rotational angular position of 0° , for example, the difference in phase between two wobbling tracks adjacent to each other can be set at a fixed value of any one of 0° , 180° , 90° or 270° .

In this embodiment, however, compatibility with the existing DVD-ROM is taken into consideration. Thus, it is not sufficient to just set the wobbling period in accordance with the increase Δ in total length. Instead, it is necessary to set the wobbling wavelength at a value determined as follows.

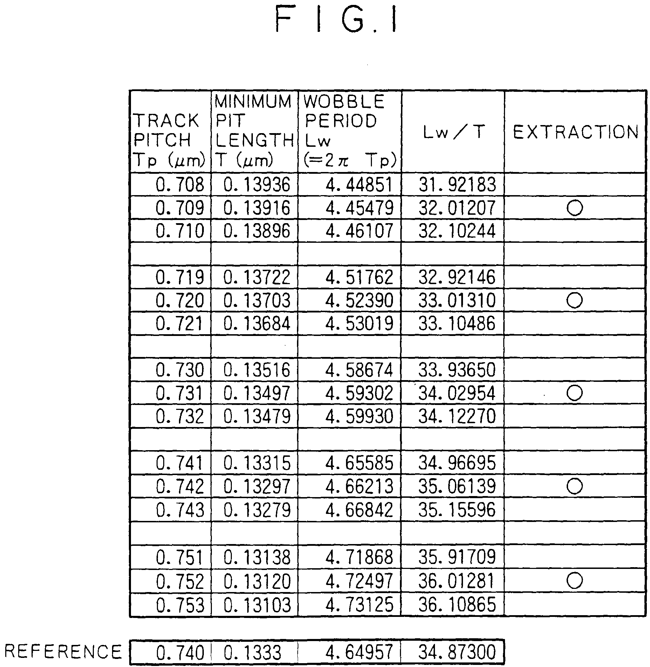

First of all, in specifications of a DVD-ROM, the track pitch TP is set at 0.740 μm and the minimum channel bit length T of data is set at 0.1333 μm as shown as reference values on the bottom line of the table of Fig. 1.

It is desirable to set the relation between the wobbling period of CLD wobbles and the minimum channel bit length at an integer ratio.

The wobbling period (or the wavelength) Lw is found from the equation $\Delta = 2\pi \cdot Tp$ and by substitution of 0.740 μm for the track pitch Tp in the equation to give a value of 4.4696 μm whereas the ratio Lw/T of the wobbling period Lw to the minimum channel bit length T is 34.873 μm, which is not an integer, which is not an integer as shown in Fig. 1.

Then, consider other values of the track pitch Tp and the minimum channel bit length T.

It is not necessary to strictly adjust the track pitch Tp and the minimum channel bit length T to numerical values prescribed in the basic specifications. Instead, by setting them at values close to the specifications to a certain degree, compatibility with the existing DVD-ROM can be sustained. For this reason, if combinations of the track pitch Tp and the minimum channel bit length T are thought of with the data surface density adjusted to the basic specifications, a variety of combinations shown in the table of Fig. 1 are conceivable.

In addition, the values of the wobbling period (or the wavelength) Lw found from the equation $\Delta - 2\pi \cdot Tp$ and the ratio Lw/T of the wobbling period Lw to the minimum channel bit length T for each of the combinations are also shown in the table of Fig. 1.

A symbol ◯ on the rightmost column of the table indicates that the ratio Lw/T for the combination of the track pitch Tp and the minimum channel bit length T is the value close to an integer.

There are five combinations each having a ratio Lw/T close to an integer as follows.

Tp = 0.709 T = 0.13916 --- (Lw/T = 32.01207)

Tp = 0.720 T = 0.13703 --- (Lw/T = 33.01310)

Tp = 0.731 T = 0.13497 --- (Lw/T = 34.02954)

Tp = 0.742 T = 0.13297 --- (Lw/T = 35.06139)

Tp = 0.752 T = 0.13120 --- (Lw/T = 36.01281)

Then, the values of the track pitch Tp and the minimum channel bit length T in each of the combinations listed above are modified so as to give an integer ratio Lw/T as follows.

Lw/T = 32.0000 referred to as a 32T system.

Lw/T = 33.0000 referred to as a 33T system.

Lw/T = 34.0000 referred to as a 34T system.

Lw/T = 35.0000 referred to as a 35T system.

Lw/T = 36.0000 referred to as a 36T system.

The 32T system on the list described above is suitable for various kinds of processing due to the fact that the ratio Lw/T = 32.0000 is a parameter equal to a multiple of 8.

The 35T system is advantageous in that the values of the track pitch Tp and the minimum channel bit length T are closest to the reference specifications of the DVD-ROM.

The 36T system on the list described above is suitable for various kinds of processing due to the fact that the ratio Lw/T = 36.0000 is a parameter equal to a multiple of 9.

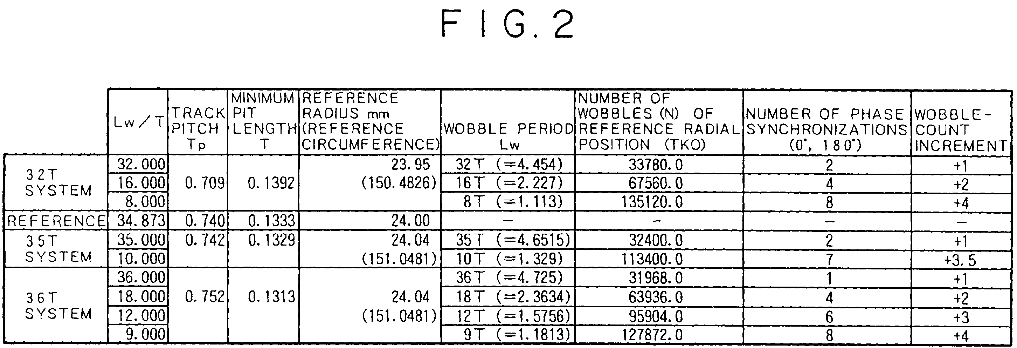

Specifications of the 32T system, the 35T system and the 36T system are shown in Fig. 2. It should be noted that, while only the 32T system, the 35T system and the 36T system are each described below as an example, the present invention can also be applied to the 33T and 34T systems as well.

To begin with, the track pitch Tp is 0.709 μm and the minimum channel bit length is 0.1392 μm in the 32T system as shown in Fig. 2.

In this case, a track with a radius of 23.95 mm on the disc is used as a reference track for setting the wobbling period. The perimeter of this track is 150.4826 mm.

Then, the wobbling period (or the wavelength) Lw is found from the equation $\Delta = 2\pi \cdot Tp$. Assuming $Lw = \Delta$,

$$Lw = 2\pi \cdot Tp = 2\pi \cdot 0.709 = 4.454 \ (\mu m).$$

In this case, the wobbling period $Lw = 32T$.

Thus, the wobble count N at the reference track with a radius of 23.95 mm on the disc is 33780.0. The wobble count is incremented by 1 each time the head moves on to a track on the outer side.

In addition, the difference in phase between two tracks adjacent to each other is fixed at 0° or 180° as shown in the figure. The number of times in which a phase synchronization occurs at such a difference in phase on a track circle is 2. It should be noted that the difference in phase between two wobbling tracks adjacent to each other can also be fixed at 90° or 270°. In this case, the number of times a phase synchronization occurs is 4 which is twice as much as that shown in the figure.

It should be noted that the wobbling-phase relation between tracks adjacent to each other and the number phase-synchronization occurrences will be explained concretely in the descriptions of disc examples 1 to 9 given later. It is worth noting, however, that these disc examples are adapted for the 36T and 35T systems. As for the 32T system, it is to be understood that the wobbling structure and the positions of fine clock marks on the disc from the descriptions of the disc examples and the specification table shown in Fig. 2.

As other possible embodiments of the 32T, discs with $Lw = 16T$ and $Lw = 8T$, or the ratio $Lw/T = 16.000$ and $Lw/T = 8.000$ respectively are also conceivable.

In the case of $Lw = 16T$, the wobbling period $Lw = 2.227$ μm. Thus, the wobble count N at the reference track is 67560.0 which is twice as much as with the case of the embodiment with $Lw = 32T$. The wobble count N is incremented by 2 each time the head moves on to a track on the outer side and the number of phase-synchronization occurrences is 4.

In the case of $Lw = 8T$, the wobbling period $Lw = 1.113$ μm. Thus, the wobble count N at the reference track is 135120.0. The wobble count N is incremented by 4 each time the head moves on to a track on the outer side and the number of phase-synchronization occurrences is 8.

In the 35T system, the track pitch Tp is 0.742 μm and the minimum channel bit length T is 0.1329 μm.

In this case, a track with a radius of 24.04 mm on the disc is used as a reference track for setting the wobbling period. The perimeter of this track is 151.0481 mm.

Then, the wobbling period (or the wavelength) Lw is found based on the track pitch Tp and the equation $\Delta = 2\pi \cdot Tp$ to give 4.6515 μm. Thus, the wobbling period $Lw = 35T$.

Accordingly, the wobble count N at the reference track (that is, a disc track with a radius of 24.04 mm) is 32400.0. The wobble count N is incremented by 1 each time the head moves on to a track on the outer side and the number of phase-synchronization occurrences is 2.

As a 35T system, $Lw = 10T$ is also conceivable.

In the case of $Lw = 10T$, the wobbling period $Lw = 1.329$ μm and the wobble count N at the reference track is 113400.0. The wobble count N is incremented by 3.5 each time the head moves on to a track on the outer side and the number of phase-synchronization occurrences is 7. For example, the wobble count N at a track on the outer side of the reference track is 113403.5.

Finally, in the 36T system, the track pitch Tp is 0.752 μm and the minimum channel bit length T is 0.1313 μm.

In this case, a track with a radius of 24.04 mm on the disc is used as a reference track for setting the wobbling period as is the case with the 35T system. The perimeter of this track is 151.0481 mm.

Then, the wobbling period (or the wavelength) Lw is found based on the track pitch Tp and the equation $\Delta = 2\pi \cdot Tp$ to give 4.725 μm. Thus, the wobbling period $Lw = 36T$.

Thus, the wobble count N at the reference track (that is, a disc track with a radius of 24.04 mm) is 31968.0. The wobble count N is incremented by 1 each time the head moves on to a track on the outer side and the number of phase-synchronization occurrences is 1.

As a 36T system, it is possible to have $Lw = 18T$, $Lw = 12T$ and $Lw = 9T$.

In the case of $Lw = 18T$, the wobbling period $Lw = 2.3634$ μm and the wobble count N at the reference track is 63936.0. The wobble count N is incremented by 2 each time the head moves on to a track on the outer side and the number of phase-synchronization occurrences is 4.

In the case of $Lw = 12T$, the wobbling period $Lw = 1.5756$ μm and the wobble count N at the reference track is 95904.0. The wobble count N is incremented by 3 each time the head moves on to a track on the outer side and the number of phase-synchronization occurrences is 6.

In the case of Lw = 9T , the wobbling period Lw = 1.1813 μm and the wobble count N at the reference track is 127872.0. The wobble count N is incremented by 4 each time the head moves on to a track on the outer side and the number of phase-synchronization occurrences is 8.

The nine specification patterns excluding the reference specifications as described above by referring to Fig. 2 satisfy requirements that the wobble count N included in a track circle is an integer or an integer + 0.5 and the number of wobbling-wave periods included in a track circle is incremented by m/4 each time the head moves on to the outer side by one track where m is an integer. In addition, compatibility with the existing DVD-ROM is sustained and matching of the CLD wobbling period and the minimum channel bit length bit length is good.

It should be noted that there are of course many other specifications for implementing the present invention.

3. First Disc Example

Next, a variety of embodiments based on the 36T or 35T systems described above are exemplified by taking first to ninth disc examples.

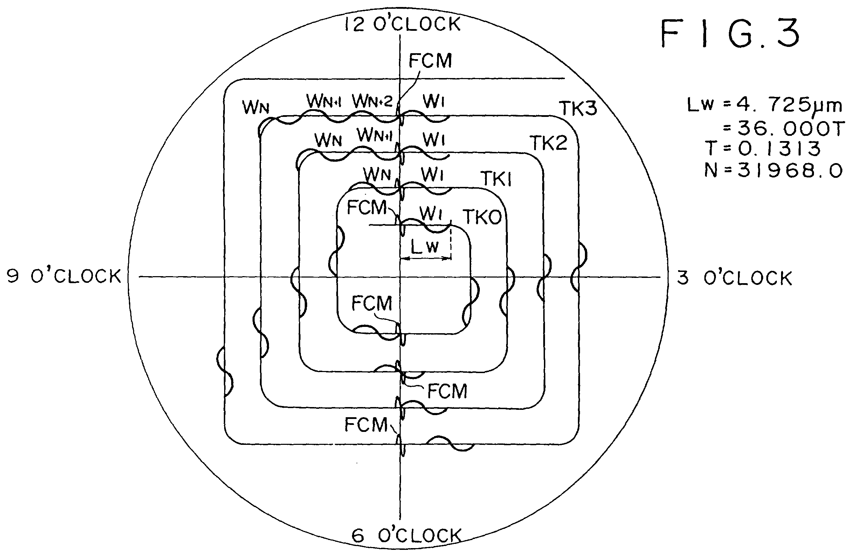

Explained by referring to Fig. 3, the first disc example corresponds to the 36T system with Lw = 36T .

Before explaining the first disc example, expression formats in figures used in the descriptions of the first to ninth disc examples are enlightened.

To begin with, Figs. 3, 8, 10, 11, 12, 15, 16, 17 and 18 are diagrams showing the first to ninth disc examples, respectively. In order to make the wobbling waveforms of these tracks easy to recognize, a track which actually has a circular shape is expressed by a kind of deformation having an approximately rectangular shape.

Waveforms W (W1, W2, ----, Wn, ---) shown on a track each represents the wobbling shape (the wobbling carrier waveform) of the track.

As rotational angular positions, the 12-o'clock position is the 0° position, the 3-o'clock position is the 90° position, the 6-o'clock position is the 180° position and the 9-o'clock position is the 270° position.

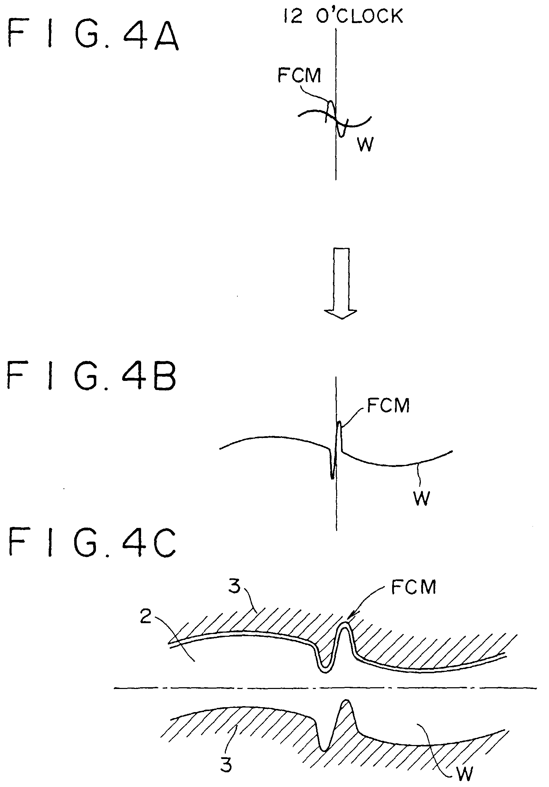

At the 12-o'clock position shown in Fig. 3, for example, waveforms FCM and W overlap each other on the track as shown in Fig. 4A. Fig. 4B is a diagram showing a more accurate representation of the waveforms. Considering a difficulty of expression due to the size of the drawing and easiness to view the drawing, the expression like the one shown in Fig. 4A is adopted.

The waveform FCM represents a fine clock mark. To put it in detail, a fine clock mark FCM is a wobbling waveform having a small wavelength and a large amplitude in comparison with the wobbling waveform W of the wobbling groove 2 as shown in Fig. 4C.

In addition, in the diagrams of Figs. 3, 8, 10, 11, 12, 15, 16, 17 and 18, the wobbling waveform W is merely based on an unmodulated carrier frequency. On the other hand, the waveform of a fine clock mark FCM is drawn without taking the polarity of the actual phase into account.

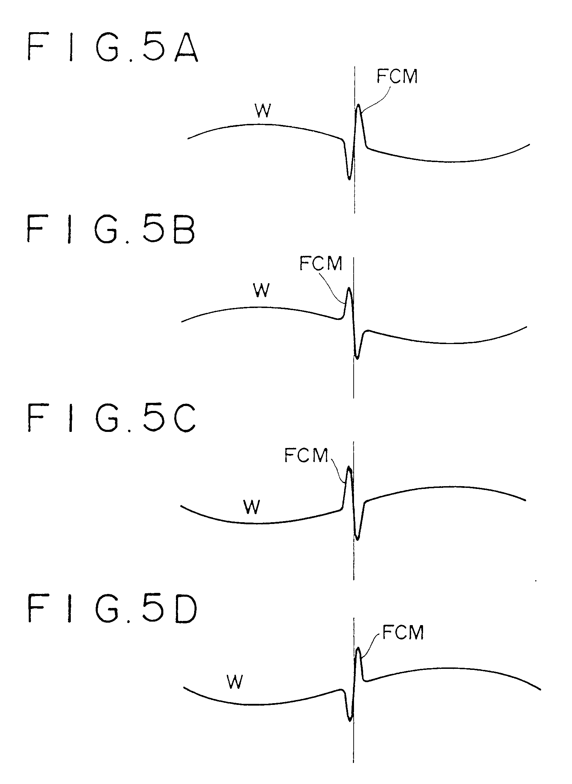

At the 12-o'clock position shown in Fig. 3, for example, the phase relation between the wobbling waveform W and the waveform of a fine clock maker FCM is shown in Fig. 5C. In actuality, however, since the wobbling waveform is obtained by modulating a carrier frequency by using address data, the phase state shown in the drawing is not the phase corresponding to the modulated carrier frequency. For example, the phase may be opposite to what is shown in the drawing, shifted from what is shown by 180° in some cases. In addition, the phase of the waveform of a fine clock mark FCM may be inverted by wobbling modulation data.

In actuality, the phase relation between the wobbling waveform W and the waveform of a fine clock mark FCM at the 12-o'clock position shown in Fig. 3 may be thus any one of those shown in Figs. 5A through 5D besides that shown in Fig. 5C.

Then, at the 6-o'clock position shown in Fig. 3, for example, and at positions shown in other diagrams, the position into which the waveform of a fine clock mark FCM is inserted is the same as the insertion position at the 12-o'clock position shown in Fig. 3 and the phase relations indicated are not the actual phase relations.

In other words, in achieving the object of the present invention, the difference in phase between the wobbling waveforms W on two tracks adjacent to each other at the 12-o'clock position is fixed at 0° or 180° . In addition, a phase difference of 90° or 270° is equivalent as far as the effect is concerned.

Fig. 3 is a diagram showing a first disc example used for explaining a disc of the 36T system with Lw = 36T .

As described above, with the track pitch Tp set at 0.752 μm and the minimum channel bit length T set at 0.1313 μm, a disc track with a perimeter of 151.0481 mm and a radius of 24.04 mm is used as a reference track. This reference track is denoted by notation TK0 in Fig. 3.

Then, with the wobbling period Lw set at 4.725 μm (= 36T), the wobble count N at the track TK0 is 31968.0. The wobble count N is thus an integer which is incremented by 1 as the head moves on to an outer circumference tracing tracks TK1, TK2 and so on.

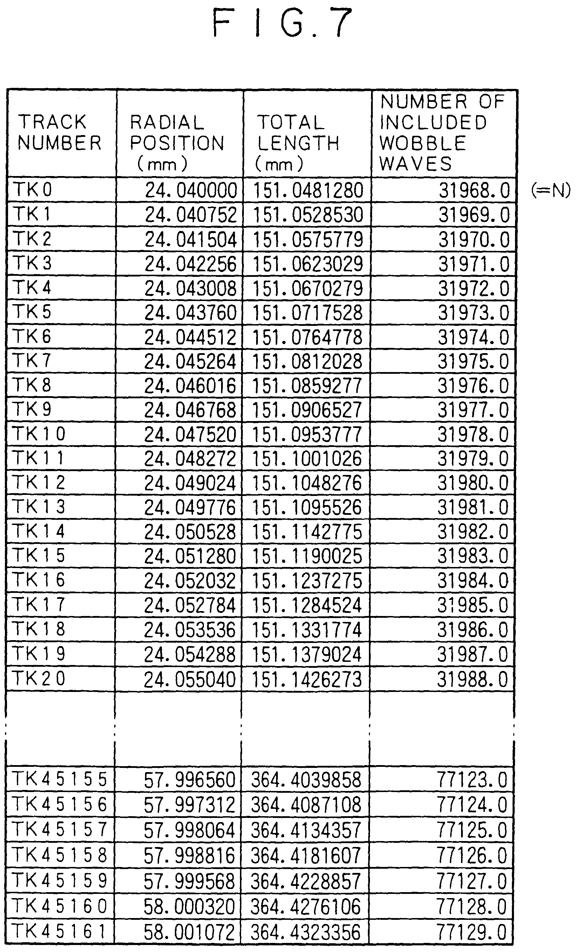

Fig. 7 is a table showing wobble counts for each track. As shown in the table, the wobble count of the reference track TK0 is an integer which is incremented by 1 as the head moves on to an outer circumference, tracing tracks. Accordingly, the wobble count of each track is an integer.

It should be noted that the disc track with a radius of 24.04 mm used as the reference track TK0 is not the track on the innermost circumference serving as a valid track in the format of the DVD and the CD. The track on the innermost circumference serving as a valid track for them has a radius of 24.00 mm.

The reference track TK0 cited in the description of the present invention is a track properly selected for setting a wobbling period Lw. Such a reference track has a good wobble count for setting wobble counts of all tracks at an integer value or an integer value + 0.5.

That is to say, with the relation $Lw = 2\pi \cdot Tp$ used to find a wobble count as described above, the wobble count is incremented each time the head moves on to an outer circumference by one track. If the wobble count of the reference track is not an integer, however, the wobble counts of other tracks are not integers either.

It is thus necessary to select a track, for which the wobble count found from a relation between the total length of the track and the wobbling period Lw is an integer, as a reference track. In this example, a disc track with a radius of 24.04 mm is selected as a reference track for that reason.

In this case, any track with a radius in the range of 24.00 mm to 24.04 mm, that is, any track on the inner-side circumference of the reference track TK0, is a valid track which is not shown in Fig. 7. As the head moves on to an inner circumference, tracing these valid tracks, the wobble count is decremented by 1. For example, the wobble count of a track TK(-1) adjacent to the track TK0 on the inner side is 31967.0. At any rate, the fact that the wobble counts of the tracks on inner circumferential side by one track are also integers does not change.

It should be noted that what is described above holds true of the second to ninth disc examples.

As is obvious from Fig. 7, by setting the wobbling period Lw at 4.725 μm, the wobble counts of all tracks including of course the reference track TK0 can be made integers.

Thus, when wobbling at the start point (or the 12-o'clock position) of the reference track TK0 is set to begin from a 0° phase in the positive-polarity direction, that is, with the outer side of a track on the drawing taken as the positive polarity, at the start point of each track, the wobbling phase begins from a 0° phase in the positive-polarity direction as shown in the figure. That is to say, at the 12-o'clock position, all the wobbling phases are oriented uniformly in the radial direction. As described earlier, since wobbling is actually based on modulation data, the phase differences are set uniformly at 0 or 180°.

In addition, since the wobble count of the reference track TK0 is an even integer, the wobbling phase starts from 0° in the positive-polarity direction at the 6-o'clock position as well.

On the other hand, the wobble count of the next track TK1 is 31969 which is an odd integer. In this case, the wobbling phase starts from 180° in the negative-polarity direction at the 6-o'clock position.

By the same token, the wobbling phases of the tracks TK2, TK4, TK6 and so on, each starts from 0° in the positive-polarity direction at the 6-o'clock position. On the other hand, the wobbling phases of the tracks TK3, TK5, TK7 and so on, each starts from 180° in the negative-polarity direction at the 6-o'clock position.

That is to say, the wobbling phases of all tracks are set uniformly at the 6-o'clock position at a phase difference of 0 or 180° in this disc example.

Since the phase relations are fixed uniformly as described above, the number of beats caused by mutual wobbling interference between tracks adjacent to each other can be decreased considerably, raising no longer problem.

Next, the fine clock mark FCM is discussed.

Basically, phases of the CLD wobbling are not oriented uniformly in the radial direction. It is thus inappropriate to add a fine clock mark to serve as a CAV mark (a rotational-angular-position mark) at an arbitrary rotational angular position. This is because, if fine clock marks are inserted into arbitrary phases of the wobbling waveform at random, mutual interference between the wobbling waveform and the fine clock marks will occur.

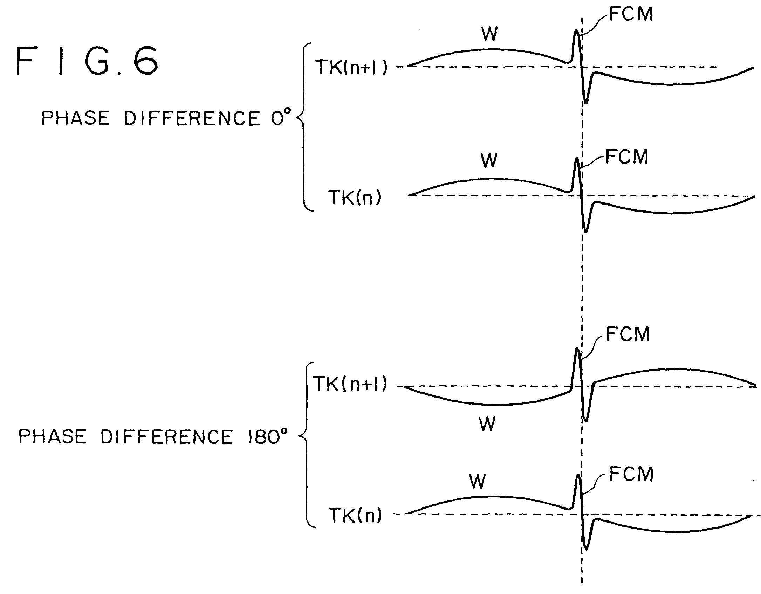

In order to avoid such mutual interference, it is appropriate to insert fine clock marks FCM into positions where differences in wobbling phase are set uniformly at 0° or 180° as shown in Fig. 6.

In this example, in spite of CLD wobbling, phases of the wobbling waveform at 12-o'clock and 6-o'clock positions are set uniformly as described above. That is to say, the number of phase-synchronization occurrences in a track circle is 2 as also shown in Fig. 2. The number of phase-synchronization occurrences is the number of positions at which the difference in phase is fixed at 0° or 180°. Thus, fine clock marks FCM are inserted into the 12-o'clock and 6-o'clock positions as shown in Fig. 3.

By providing such a configuration, the effect of the fine clock mark FCM on wobbling information extracted by the recording/playback apparatus can be suppressed to a minimum. In addition, it is also possible to reduce the effect of the wobbling track on the fine clock mark information extracted by the recording/playback apparatus. That is to say, the wobbling information and the fine clock marks can each be obtained with a high degree of precision.

In other words, in spite of CLD wobbling, fine clock marks for CAV control can be inserted without a problem.

4. Second Disc Example

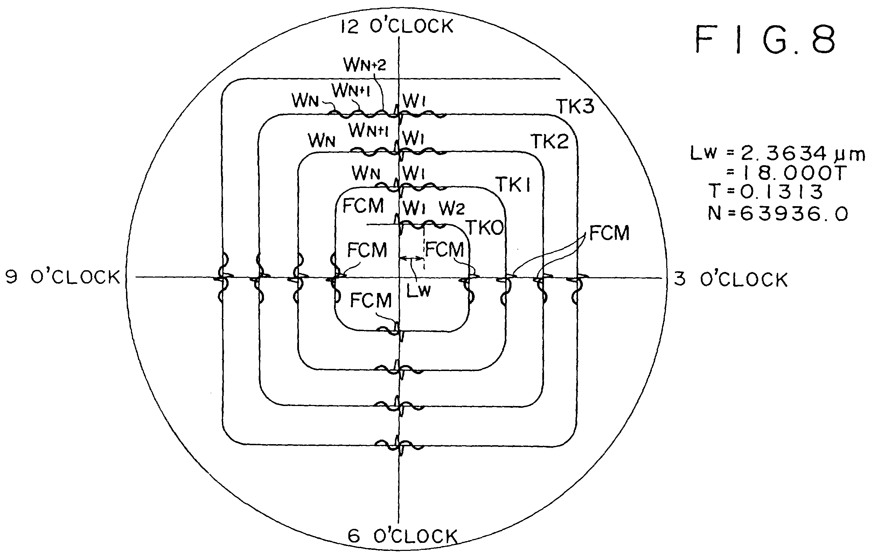

As a second disc example, a disc adopting the 36T system with Lw = 18T is described by referring to Fig. 8.

Much like the first disc example, with the track pitch Tp set at 0.752 μm and the minimum channel bit length T at 0.1313 μm, a disc track with a radius of 24.04 mm or a perimeter of 151.0481 mm is selected as a reference track TK0 for setting the wobbling period.

Then, with the wobbling period Lw set at 2.3634 μm (= 18T), the wobble count N at the track TK0 is 63936.0. The wobble count N is thus an integer which is incremented by 2 as the head moves on to an outer circumferential track, tracing tracks TK1, TK2 and so on.

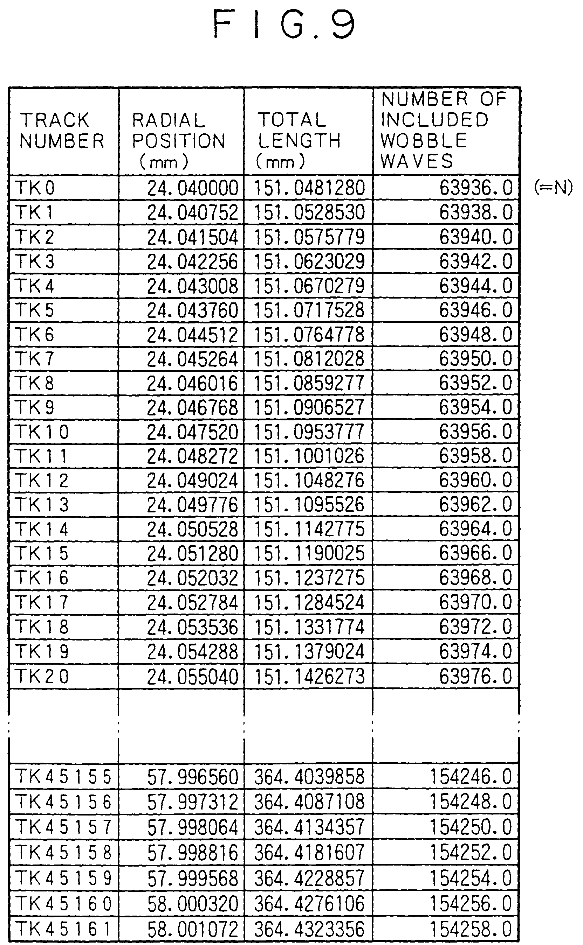

Fig. 9 is a table showing wobble counts for tracks. As shown in the table, the wobble count of the reference track TK0 is an integer which is incremented by 2 each time the head moves on to an outer circumference by one track. The wobble count of each track is an integer.

Since the wobble count of each track is an integer as described above, by setting the wobbling phase of the reference track TK0 to start from 0° in the positive-polarity direction at the start point of the track TK0 (at the 12-o'clock position thereof), the wobbling phase of each track TK0 starts from 0° in the positive-polarity direction at the start point of the track as shown in Fig. 8. That is to say, the wobbling phases of all the tracks start uniformly from 0° in the positive-polarity direction, that is at the 12-o'clock positions of the tracks.

In the case of this example, the wobble count is incremented by 2 every time the head moves on to an outer circumference by one track. Thus, at the position in the middle of track circle, that is, at the 6-o'clock position for all the tracks, the wobbling phase starts from 0° in the positive-polarity direction.

As described above, the wobbling phases start uniformly in the radial direction at two positions, namely, the 12-o'clock and 6-o'clock positions.

In addition, in the case of this example, the wobble count included in each track circle is an even integer. Thus, the difference in phase between tracks adjacent to each other is 180° at the 3-o'clock and 9-o'clock positions. That is to say, the differences in wobbling phase between any tracks in the radial direction are set uniformly at either 0° or 180° .

As a result, much like the first disc example, the number of beats caused by mutual wobbling interference between two tracks adjacent to each other can be reduced considerably due to the uniformly fixed relation between phases.

As for fine clock marks FCM, fine clock marks FCM having no mutual interference on wobbling can be inserted into four positions, namely, the 12-o'clock, 6-o'clock, 3-o'clock and 9-o'clock positions, as shown in Fig. 8.

In this way, the wobbling information and the information on the fine clock marks can each be obtained with a high degree of precision. In addition, by inserting a number of fine clock marks FCM, CAV control can be implemented with a higher degree of precision.

## 5. Third Disc Example

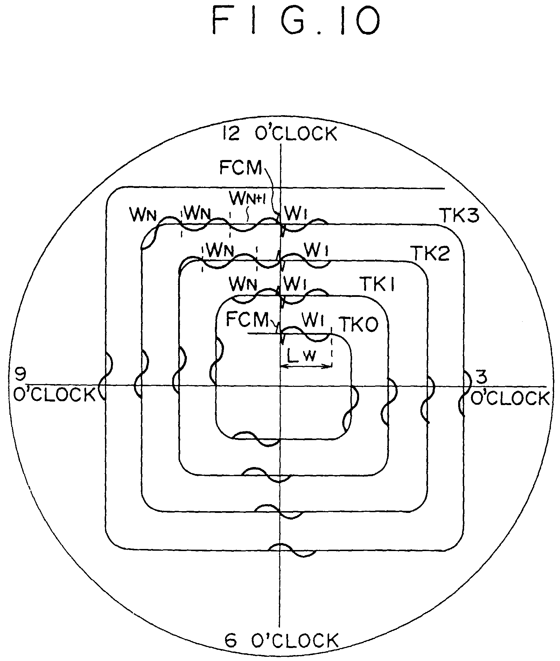

Next, a third disc example is explained by referring to Fig. 10. This example is an embodiment of a type not shown in Fig. 2, in which the wobble count is incremented by 0.5 each time the head moves on to the outer-side circumference by one track.

Thus, in this configuration, tracks each having an integer wobble count and tracks each having an (integer + 0.5) wobble count are arranged alternately.

In the case of this example, by setting the wobbling phase of the reference track TK0 to start from 0° in the positive-polarity direction at the start point of the track TK0 (at the 12-o'clock position thereof), tracks each having a wobbling-phase difference of 180° at the start point thereof and tracks each having a wobbling-phase difference of 0° at the start point thereof are arranged alternately.

The differences in wobbling phase at the 12-o'clock positions between any tracks in the radial direction are set uniformly at either 0° or 180° .

In this example, by inserting a fine clock mark FCM into the 12-o'clock position only, mutual interference between the fine clock mark FCM and the wobbling waveforms can be eliminated.

It should be noted that only one fine clock mark to serve as information indicating a rotational angular position is provided for a track circle in the case of this example, causing a disadvantage to the CAV control. Since only one fine clock mark to serve as information indicating a rotational angular position is provided for a track circle, on the contrary, there is provided an advantage of an ability to use the fine control mark as a reference signal for synchronization of one rotation.

## 6. Fourth Disc Example

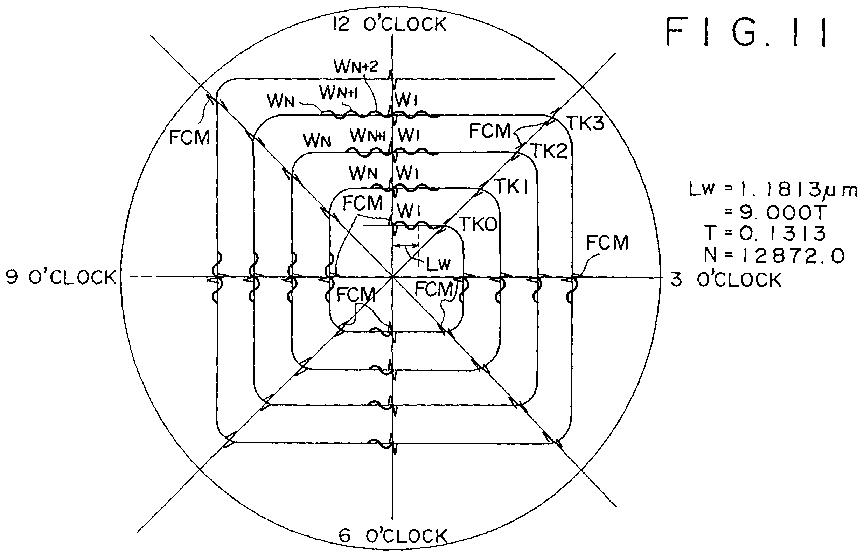

Fig. 11 is a diagram showing a fourth disc example which is an implementation of the 36T system with Lw = 9T shown in Fig. 2.

Much like the first and second disc examples, with the track pitch Tp set at 0.752 μm and the minimum channel bit length T at 0.1313 μm, a disc track with a radius of 24.04 mm or a perimeter of 151.0481 mm is selected as a reference track TK0 for setting the wobbling period.

Then, with the wobbling period Lw set at 1.1813 μm (= 9T), the wobble count N at the track TK0 is 127872.0. The wobble count N is thus an integer which is incremented by 4 as the head moves on to an outer circumference, tracing tracks TK1, TK2 and so on. Of course, the wobble counts of all tracks are also integers.

Since the wobble count of each track is an integer as described above, by setting the wobbling phase of the reference track TK0 to start from 0° in the positive-polarity direction at the start point of the track TK0 (at the 12-o'clock position thereof), the wobbling phase of each track TK0 starts from 0° in the positive-polarity direction at the start point of all the tracks as shown in the figure. That is to say, the wobbling phases of all the tracks start uniformly in the radial direction from 0° in the positive-polarity direction at the 12-o'clock positions of the tracks. In the case of this example, the wobble count is incremented by 4 every time the head moves on to an outer circumference by one track. Thus, at the position of the 6-o'clock, 3-o'clock and 9 o'clock positions, the wobbling phase starts from 0° in the positive-polarity direction as shown in the figure.

As described above, the wobbling phases start uniformly in the radial direction at four positions, namely, the 12-o'clock and 6-o'clock, 3-o'clock and 9 o'clock positions.

In addition, in the case of this example, the wobble count included in a track circle is an even integer for all tracks. Thus, at a position with a rotational angle of 45° (= at 1:30), at a position with a rotational angle of 135° (= at 4:30), at a position with a rotational angle of 225° (= at 7:30) and at a position with a rotational angle of 315° (= at 10:30), the difference in phase between any tracks adjacent to each other is 180° . That is to say, the differences in wobbling phase between any tracks in the radial direction are set uniformly at either 0 or 180° .

Thus, in the case of this embodiment, it is possible to add fine clock marks FCM which do not have an interference on the wobbling waveform and have an effect of beat reduction at 8 positions on a track circle as shown in the figure.

In this way, the wobbling information and the fine clock marks can each be obtained with a high degree of precision. In addition, by inserting a number of fine clock marks FCM, CAV control can be implemented with a higher degree of precision.

7. Fifth Disc Example

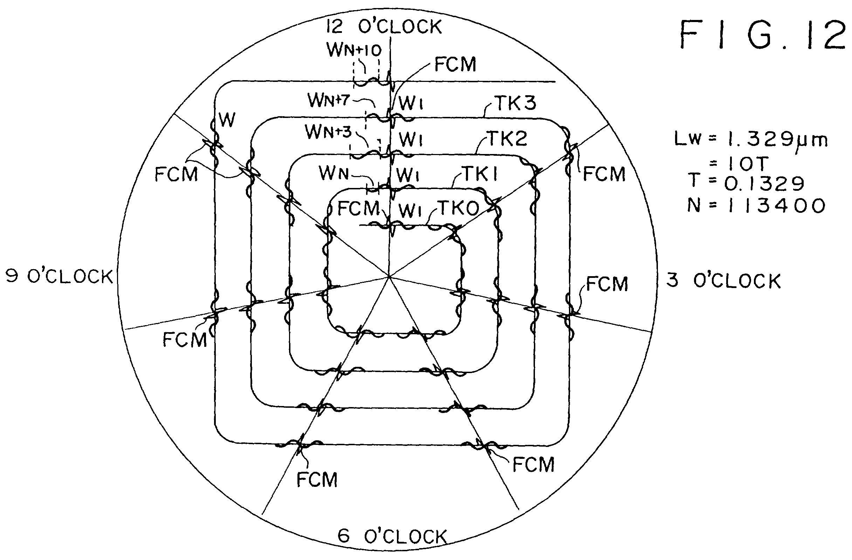

Fig. 12 is a diagram showing a fifth disc example which is an implementation of the 35T system with Lw = 10T shown in Fig. 2.

In the case of this fifth disc example, with the track pitch Tp set at 0.742 μm and the minimum channel bit length T at 0.1329 μm, a disc track with a radius of 24.04 mm or a circular length of 151.0481 mm is selected as a reference track TK0 for setting the wobbling period.

Then, with the wobbling period Lw set at 1.329 μm (= 10T), the wobble count N at the track TK0 is 113400.0. The wobble count N is thus an integer which is incremented by 3.5 as the head moves on to an outer circumference, tracing tracks TK1, TK2 and so on.

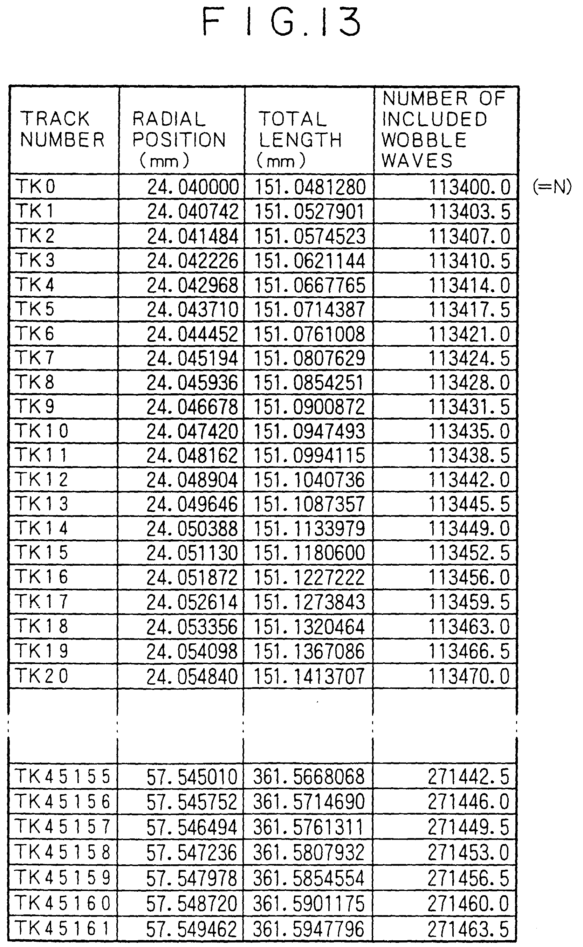

Fig. 13 is a table showing wobble counts for tracks. As shown in the table, the wobble count of the reference track TK0 is an integer which is incremented by 3.5 each time the head moves on to an outer circumference by one track. As a result, tracks each having an integer wobble count and tracks each having an (integer + 0.5) wobble count are arranged alternately.

In the case of this disc example, by setting the wobbling phase of the reference track TK0 to start from 0° in the positive-polarity direction at the start point of the track TK0 (at the 12-o'clock position thereof), tracks each having a wobbling-phase difference of 180° at the start point thereof and tracks each having a wobbling-phase difference of 0° at the start point thereof are arranged alternately.

The differences in wobbling phase at the 12-o'clock positions between any tracks in the radial direction are set uniformly at either 0° or 180° .

As described above, the wobble count of the reference track TK0 is an integer which is incremented by 3.5 each time the head moves on to an outer circumference by 1 track. Thus, the differences in wobbling phase at intervals of 1/7 of a track circle between any tracks in the radial direction are set uniformly at 180° as shown in Fig. 12.

That is to say, the differences in wobbling phase at seven positions on the track circle between any tracks in the radial direction are set uniformly at either 0° or 180 ° .

As a result, much like the first disc example, the number of beats caused by mutual wobbling interference between two tracks adjacent to each other can be reduced considerably due to the uniformly fixed relation between phases.

As for fine clock marks FCM, fine clock marks FCM having no mutual interference on wobbling can be inserted into the seven positions as shown in Fig. 12.

In this way, the wobbling information and the fine clock mark information can each be obtained with a high degree of precision. In addition, by inserting a number of fine clock marks FCM, CAV control can be implemented with a higher degree of precision.

8. Sixth Disc Example

Next, the sixth disc example is explained. The sixth to ninth disc examples are the same as the first, second, fourth and fifth disc examples respectively. However, the number of fine clock marks FCM inserted into the former is twice that of the latter.

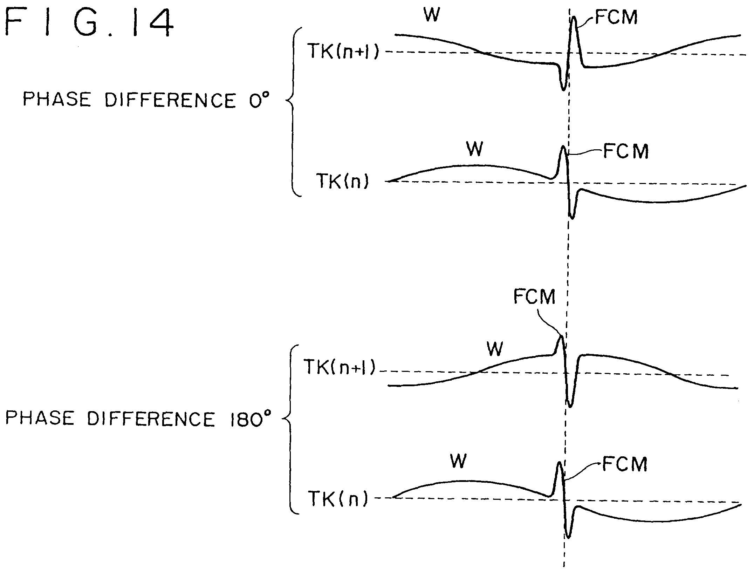

In the case of the first to fifth disc examples, fine clock marks FCM are inserted into positions where differences in wobbling phase are set uniformly at 0° or 180° as shown in Fig. 6. In the case of the sixth to ninth disc examples, on the other hand, fine clock marks FCM are inserted into positions where differences in wobbling phase are set uniformly at 90° or 270° as typically shown in Fig. 14 in addition to the positions of phase relations shown in Fig. 6.

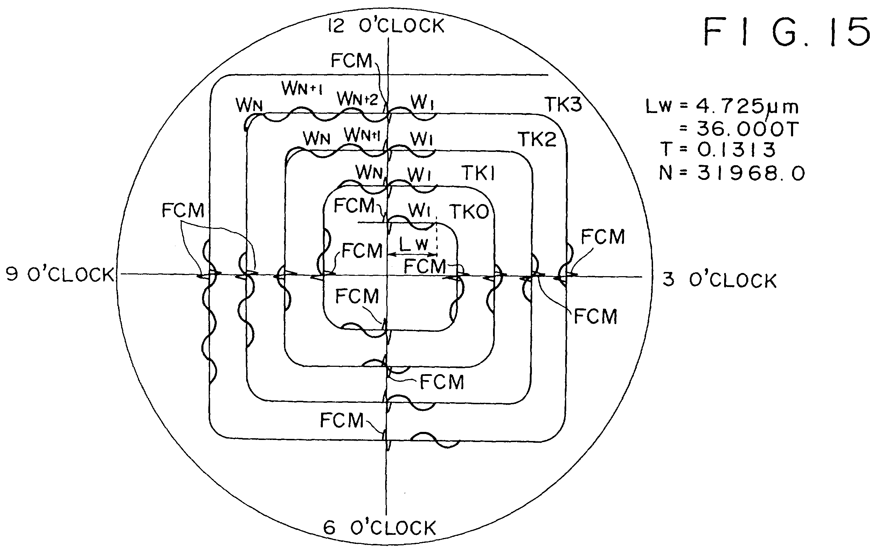

Fig. 15 is a diagram showing the sixth disc example. As shown in the figure, attributes of the disc such as the wobbling period, the wobble count and the reference track TK0 are the same as the first disc example shown in Fig. 3.

In the case of the sixth disc example, the difference in phase between wobbling tracks adjacent to each other at the 3 o'clock and 9 o'clock positions is fixed at 90° or 270° .

As shown in the figure, fine clock marks FCM are also added to the 3 o'clock and 9 o'clock positions.

As a result, the amount of interference between the fine clock marks FCM and the wobbling waveform at the 3 o'clock and 9 o'clock positions increases slightly in comparison with that at the 12 o'clock and 6 o'clock positions. However, the increase in interference does not raise a problem as far as practical use is concerned. Conversely speaking, since the number of fine clock marks FCM in a track circle can be made two times that of the disc example shown in Fig. 3, the sixth disc example has a merit that CAV control can be implemented with a higher degree of precision.

9. Seventh Disc Example

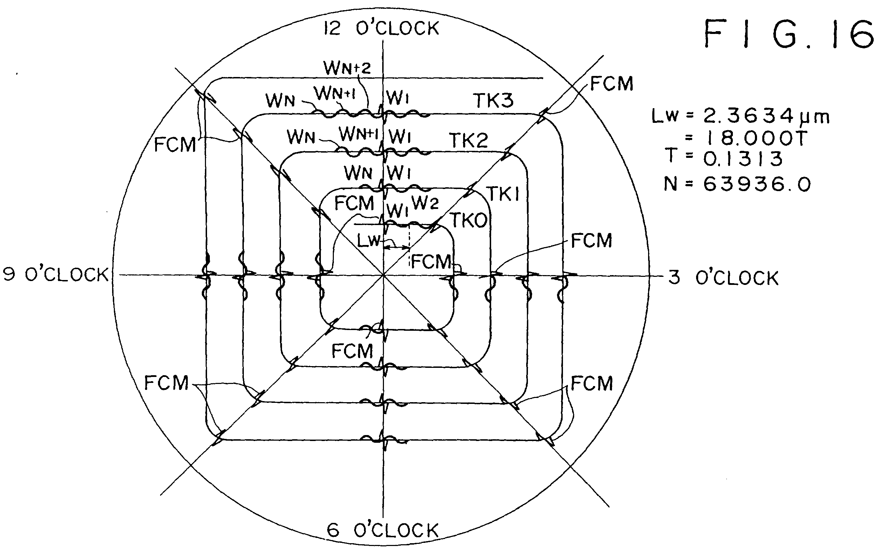

Fig. 16 is a diagram showing a seventh disc example. As shown in the figure, attributes of the disc such as the wobbling period, the wobble count and the reference track TK0 are the same as the second disc example shown in Fig. 8.

In the case of the seventh disc example, at a position with a rotational angle of 45° (= at 1:30), at a position with a rotational angle of 135° (= at 4:30), at a position with a rotational angle of 225° (= at 7:30) and at a position with a rotational angle of 315° (= at 10:30), the difference in phase between any wobbling tracks adjacent to each other is fixed at 90° or 270° .

As shown in the figure, fine clock marks FCM are also added to the 1:30, 4:30, 7:30 and 10:30 positions in addition to the 12-o'clock, 6-o'clock, 3-o'clock and 9-o'clock positions. Thus, 8 fine clock marks FCM can be inserted into one track circle.

10. Eighth Disc Example

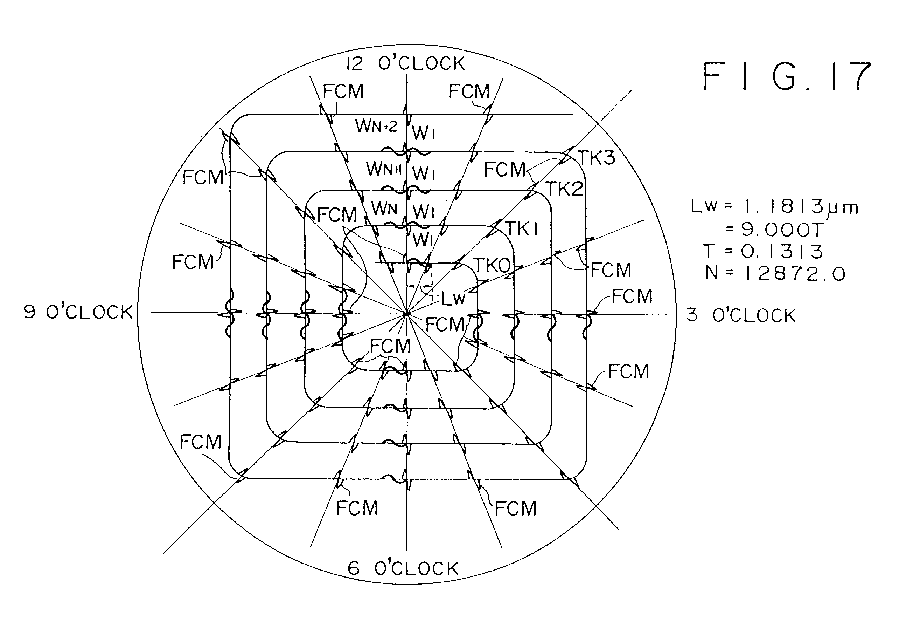

Fig. 17 is a diagram showing an eighth disc example. As shown in the figure, attributes of the disc such as the wobbling period, the wobble count and the reference track TK0 are the same as the fourth disc example shown in Fig. 11.

In the case of the eighth disc example, at 8 positions, namely, a rotational angle of 22.5° , a rotational angle of 67.5° , a rotational angle of 112.5° , a rotational angle of 157.5° , a rotational angle of 202.5° , a rotational angle of 247.5° , a rotational angle of 292.5° and a rotational angle of 337.5° , the difference in phase between any two wobbling tracks adjacent to each other is fixed at 90° or 270° .

As shown in the figure, fine clock marks FCM are added to the eight positions at which the difference in phase between any two wobbling tracks adjacent to each other is fixed at 90° or 270° in addition to the 8 positions cited in the description of the fourth disc example. As a result, 16 fine clock marks FCM can be inserted to 1 track circle.

11. Ninth Disc example

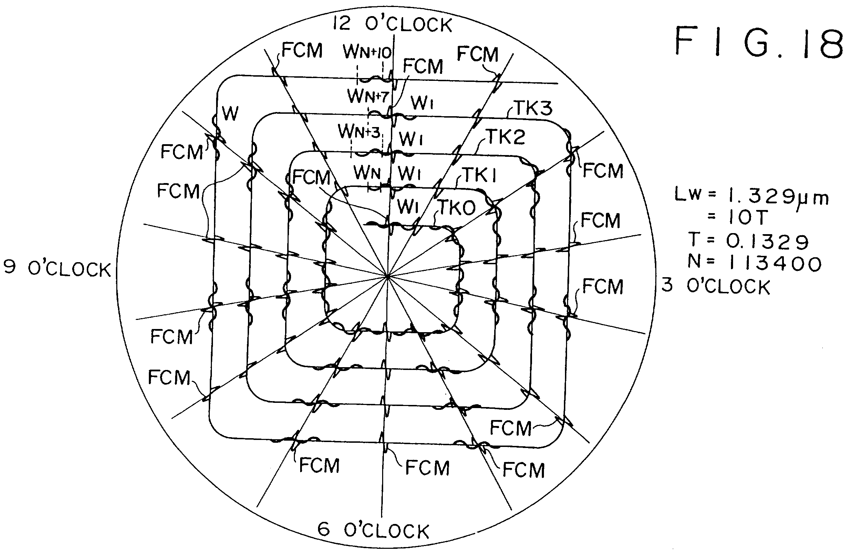

Fig. 18 is a diagram showing a ninth disc example. As shown in the figure, attributes of the disc such as the wobbling period, the wobble count and the reference track TK0 are the same as the fifth disc example shown in Fig. 12.

In the case of the eighth disc example, fine clock marks FCM are added to the 7 positions at which the difference in phase between any two wobbling tracks adjacent to each other is fixed at 90° or 270° in addition to the 7 positions at which the difference in phase between any two wobbling tracks adjacent to each other is fixed at 0° or 180° as described earlier by referring to Fig. 12.

As a result, 14 fine clock marks FCM can be inserted to 1 track circle.

12. Other Examples of Rotational-Angle Marks

So far, discs implemented by the present invention are exemplified by the first to ninth disc examples. More embodiments of the present invention are conceivable. In particular, disc examples implementing the 32T system shown in Fig. 2 are not explained. The disc examples according to the specifications shown in Fig. 2 can all be implemented. It is needless to say that disc recording media according to the present invention can also be implemented to conform to specifications other those shown in Fig. 2.

In addition, the disc examples adopt fine clock marks each having a waveform with a large amplitude and a small wavelength in comparison with the wobbling waveform as rotational-angle marks. It should be noted that rotational-angle marks are not limited to such fine clock marks.

For example, a fine clock mark can have the same amplitude as the wobbling waveform but a wavelength smaller than that of the wobbling waveform. As an alternative, a fine clock mark can have an amplitude larger than that of the wobbling waveform but a wavelength equal to that of the wobbling waveform.

In addition to the implementations of a fine clock mark with an amplitude and a wavelength set at predetermined ratios with respect to the amplitude and the wavelength of the wobbling waveform of the groove as described above, it is also conceivable to implement a fine clock mark as pit data.

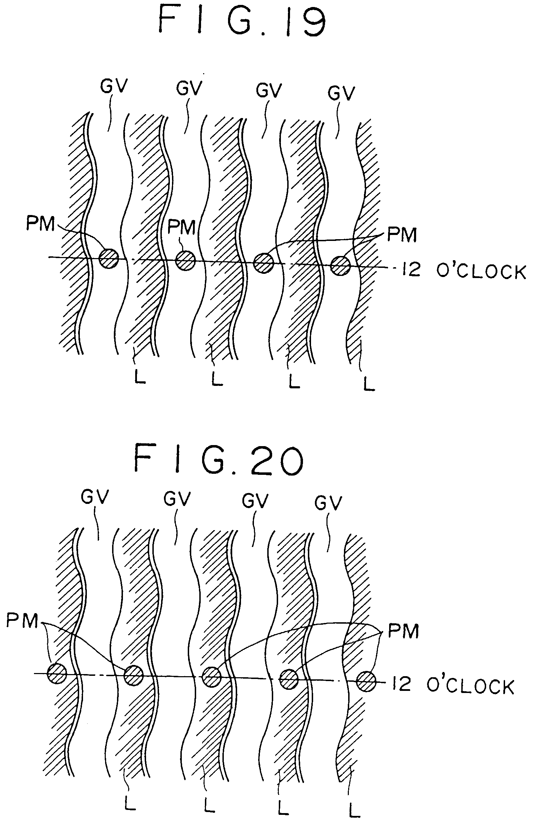

For example, Fig. 19 shows an example of forming a fine clock mark as a pit mark PM in a groove GV.

In addition, Fig. 20 shows an example of forming a fine clock mark as a pit mark PM in a land L.

It should be noted that it is conceivable to adopt a groove recording system wherein grooves are each used as a data track, a land recording system wherein lands are each used as a data track or a land/groove recording system wherein both grooves and lands are each used as a data track. The pit marks shown in Figs. 19 and 20 are both capable of functioning as a fine clock mark in either of the land recording system, the groove recording system and the land/groove recording system. To be more specific, in the case of a disc adopting the groove recording system, for example, the pit mark shown in Fig. 19 or 20 can be adopted as a fine clock mark.

In addition, a pit used as a fine clock mark can conceivably be a phase-change pit or an emboss pit.

### 13. Cutting Apparatus

The following description explains a cutting apparatus for fabricating the discs provided by the present invention as described above.

Processes to fabricate a disc can be classified into 2 large categories, namely, the so-called mastering process and the so-called replication process. The mastering process is a process up to the completion of a stamper to be used in the replication process. The replication process is a process to produce optical discs in volume as copies of the stamper made in the mastering process.

To put it concretely, the mastering process applies photoresist to a polished glass substrate and creates pits and grooves on this photosensitive film by using an exposure process using a laser beam. The creation of pits and grooves is referred to as the so-called cutting process.

In the case of this embodiment, pit cutting is carried out on a portion corresponding to an emboss area of a disc. An example of the emboss area on a disc is a management-control area on the innermost-circumference side of the disc. On the other hand, wobbling-groove cutting is carried out on a portion corresponding to a groove area.

Pit data in the emboss area is prepared in a preparatory process called premastering.

When the cutting processes are finished, predetermined processing such as development is carried out. Then, for example, information is transferred to the metallic surface by electric casting in order to make a stamper required in the replication process to produce copy discs.

Then, the stamper is used in transferring information to a resin substrate by adopting a technique such as an injection method. A reflection film is then created thereon before processing such as a fabrication of forming a required disc shape to produce a final product.

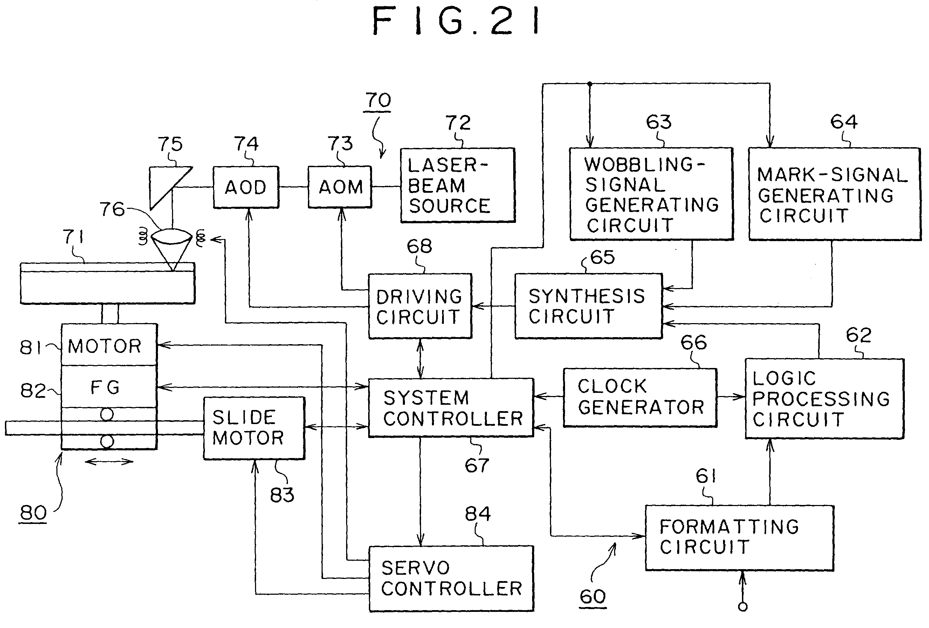

As shown typically in Fig. 21, the cutting apparatus comprises: an optical unit 70 for carrying out the cutting processes by radiating a laser beam to a glass substrate 71; a driving unit 80 for driving the glass substrate 71 into rotation; and a signal processing unit 60 for converting input data into recording data and controlling the optical unit 70 and the driving unit 80.

The optical unit 70 comprises: a laser-beam source 72 for generating typically an He-Cd laser; an optical modulator (AOM) 73 of an acoustic-optical type for carrying out on/off modulation based on recording data on a laser beam emitted by the laser-beam source 72; an optical deflector (AOD) 74 of an acoustic-optical type for deflecting a light beam radiated by the laser-beam source 72 on the basis of a wobble signal; a prism 75 for bending an optical axis of a modulated laser beam coming from the optical deflector 74; and an objective lens 76 for converging the modulated laser beam reflected by the prism 75 and radiating the converged laser beam to a photoresist surface of the glass substrate 71.

The driving unit 80 comprises: a motor 81 for driving the glass substrate 71 into rotation; an FG 82 for generating FG pulses for detecting a rotational speed of the motor 81; a slide motor 83 for sliding the glass substrate 71 in the radial direction; and a servo controller 84 for controlling, among other things, the motor 81, the rotational speed of the slide motor 83 and tracking of the objective lens 76.

The signal processing unit 60 comprises: a formatting circuit 61 for forming input data by adding typically information such as error correction codes to source data generated typically by a computer; a logic/processing circuit 62 for forming data to be recorded by carrying out predetermined processing on the input data generated by the formatting circuit 61; a wobbling-signal generating circuit 63 for generating a wobble signal for wobbling a groove; a mark-signal generating circuit 64 for generating a signal used to form a fine clock mark; a synthesis circuit 65; a driving circuit 68 for driving the optical modulator 73 and the optical deflector 74 on the basis of a signal generated by the synthesis circuit 65; a clock generator 66 for supplying a clock signal to other components such as the logic processing circuit 62; and a system controller 67 for controlling components such as the servo controller 84 on the basis of the clock signal supplied thereto.

In the cutting process carried out by this cutting apparatus, the servo controller 84 drives the glass substrate 71 at a constant angular speed by using the motor 81 and, with the glass substrate 71 rotated by the slide motor 83, slides the glass substrate 71 so as to create a track having a spiral shape at a predetermined track pitch.

At the same time, a laser beam emitted by the laser-beam source 72 is converted into a modulated beam based on data to be recorded by the optical modulator 73 and the optical deflector 74 and radiated by the objective lens 76 to the photoresist surface of the glass substrate 71. As a result, the photoresist does a photosensitive reaction based on data and grooves.

On the other hand, input data with error correction codes added thereto by the formatting circuit 61, that is, data to be recorded into the emboss area such as control data, is supplied to the logic processing circuit 62 to be converted into data to be recorded onto the disc.

With cutting timing of the emboss area, the data to be recorded is supplied to the driving circuit 68 by way of the synthesis circuit 65. In accordance with data to be recorded, the driving circuit 68 controls the optical modulator 73 to an ON state with pit timing to create a pit according to the recorded data and to an OFF state with pit timing to create no pit.

With cutting timing of the groove area, the synthesis circuit 65 synthesizes a signal output by the mark-signal generating circuit 64 to represent a fine clock mark with a signal output by the wobbling-signal generating circuit 63, that is, a signal completing PM modulation based on absolute addresses in order to supply a signal for creating wobbling to the driving circuit 68.

In order to form CLD wobbling on the glass substrate 71 rotating at a CAV, however, the wobbling carrier frequency is changed continuously with the radial position of the glass substrate 71. Control information for changing the wobbling carrier frequency is supplied by the system controller 67 to the wobbling-signal generating circuit 63.

In addition, as has been described in the explanation of the disc examples given above, in the mark-signal generating circuit 64, a signal corresponding to a fine clock mark is generated with timing for the glass substrate to arrive at a predetermined rotational angular position, that is, timing to insert a fine clock mark into the 12-o'clock or 6-o'clock position. That is why a signal indicating the rotational position of the glass substrate 71 is supplied to the mark-signal generating circuit 64 from the system controller 67.

The driving circuit 68 continuously controls the optical modulator 73 to an ON state in order to form a groove. In addition, the driving circuit 68 also drives the optical deflector 74 in accordance with a signal supplied for wobbling. Thus, a laser beam is wobbled. That is to say, a member subjected to exposure as a groove is wobbled.

In the operations described above, an exposure portion corresponding to a groove/emboss pit is formed on the glass substrate 41 on the basis of a format.

Later on, development and electric casting are carried out to make a stamper which is then used to produce the discs described above.

14. Recording/Playback Apparatus

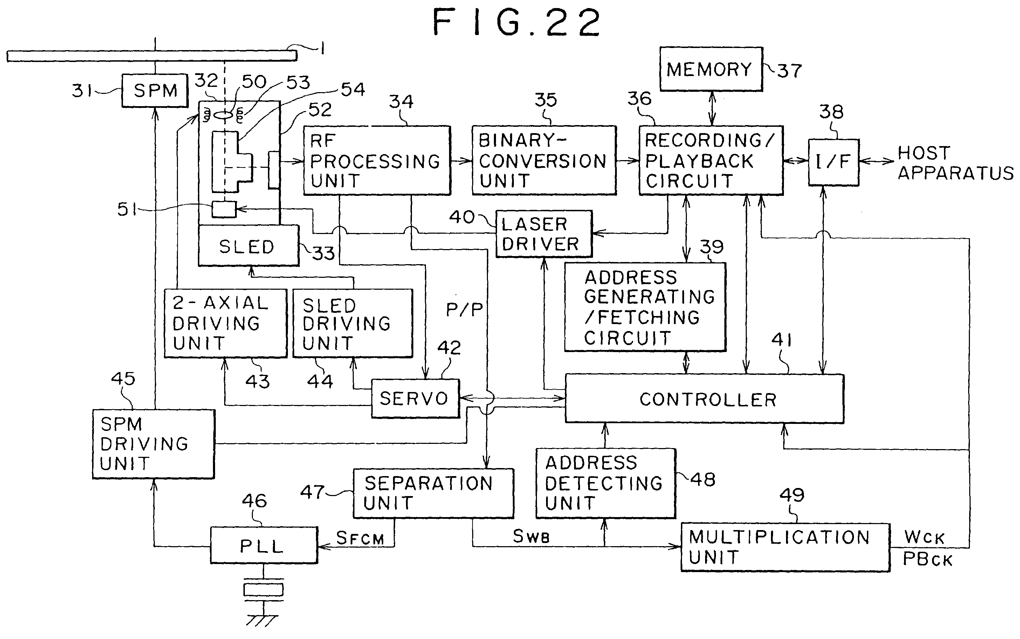

The following description explains the configuration of a recording/playback apparatus serving as an embodiment of a recording apparatus and a playback apparatus provided by the present invention with reference to Fig. 22.

The following description explains a recording/playback apparatus which is capable of carrying out recording/playback operations. It should be noted, however, that the recording/playback apparatus can of course be operated as a recording-only apparatus excluding members and operating functions required only for playback operations from the configuration and the operation of the recording/playback apparatus. On the contrary, the recording/playback apparatus can of course be operated as a playback-only apparatus excluding members and operating functions required only for recording operations from the configuration and the operation of the recording/playback apparatus.

Fig. 22 is a block diagram showing principal components of the recording/playback apparatus implemented by the embodiment.

In the block diagram shown in the figure, a disc 1 is the disc of the present invention described so far. The disc 1 is mounted on a turn table which is not shown in the figure. During a recording/playback operation, the disc 1 is driven into rotation by a spindle motor 31 at a CAV (Constant Angular Speed).

In a recording operation, a pickup 32 serving as an optical head radiates a laser beam to record data onto the disc 1. At the same time, wobbling information and information on fine clock marks of the disc 1 are fetched from information conveyed by a laser beam reflected by the disc 1 to be used for controlling the operation.

In a playback operation, on the other hand, the pickup 32 radiates a laser beam to the beam 1 and reads out data recording on the disc 1 from information conveyed by a laser beam reflected by the disc 1. At the same time, wobbling information and information on fine clock marks of the disc 1 are fetched from information conveyed by the laser beam reflected by the disc 1 to be used for controlling the operation.

The pickup 32 includes a laser diode 51 serving as a laser-beam source, a photo detector 52 for detecting a laser beam reflected by the disc 1, an objective lens 50 serving as an output terminal of a laser beam and an optical system 54 for radiating a laser beam to the recording surface of the disc 1 by way of the objective lens 50 and for guiding a laser beam reflected by the disc 1 to the photo detector 52.

The objective lens 50 can be moved by a 2-axial mechanism 53 in tracking and focusing directions.

In addition, the entire pickup 32 can be moved by a sled mechanism 33 in the radial direction of the disc 1.

The laser diode 51 which serves as laser-beam source generates a laser beam with a typical center wavelength of 650 nm.

The numerical aperture of the optical system 54 and the objective lens 50 is 0.6.

Information conveyed by a laser beam reflected by the disc 1 is detected by a photo detector 52 for converting the beam into an electrical signal representing the light quantity of the beam. The electrical signal is supplied to an RF/processing circuit 34.

The RF/processing circuit 34 includes a current-to-voltage conversion circuit for converting currents output by a plurality of photosensitive devices employed in the photo detector 52 into a voltage, and a matrix processing/amplifying circuit for carrying out matrix processing to generate necessary signals. The necessary signals include an RF signal conveying playback data, a focus-error signal FE for servo control, a tracking-error signal TE and a push-pull signal conveying information on wobbling grooves and information on fine clock marks.

In a playback operation, an playback RF signal output by the RF/processing circuit 34 is supplied to a binary conversion circuit 35.

In addition, in playback and recording operations, the focus-error and tracking-error signals output by the RF/processing circuit 34 are supplied to a servo circuit 42.

A playback RF signal output by the RF/processing circuit 34 in a playback operation is converted by the binary conversion circuit 35 into a binary signal which is then supplied to a recording/playback circuit 36 for carrying out processing such as a decoding process and error correction.

Playback data obtained as a result of the processing such as a decoding process and error correction is then stored in a memory 37 which serves as a buffer. Then, with predetermined timing, the playback data is transferred and output to a host apparatus such as a personal computer or an AV apparatus from an interface 38 in accordance with a command issued by a controller 41 which is normally implemented by a microcomputer for controlling the entire recording/playback apparatus.

In addition, during a playback operation, the recording/playback circuit 36 separates addresses from data read out from the disc 1, outputting the addresses to an address generating/fetching circuit 39. It should be noted that the addresses are recorded as data instead of wobbling. The address generating/fetching circuit 39 passes on the fetched addresses to the controller 41.

The interface 38 connects the recording/playback apparatus to an external apparatus such as a host computer which exchanges playback data, data to be recorded and a variety of commands with the recording/playback apparatus.

A command and other signals output by the host computer are supplied to the controller 41 by way of the interface 38.

The controller 41 carries out necessary recording/playback operations in accordance with a command issued by the host apparatus.

In a recording operation, the host apparatus supplies data to be recorded and a recording command to the recording/playback apparatus by way of the interface 38. The controller 41 then drives other components to carry out operations described below in accordance with the recording command.

First of all, the recording data received from the host apparatus is transferred to a recording/playback circuit 36 which temporarily stores the data to be recorded into the memory 37. As the amount of data stored in the memory 37 reaches a predetermined data recording unit, the recording/playback circuit 36 reads out the data from the memory 37 and carries out processing such as interleaving, addition of error correction codes and 8-16 modulation on the data to generate data to be actually recorded into the disc 1.

Then, the data to be recorded is output to a laser driver 40. The laser driver 40 is a member for driving the laser diode 51 to emit a laser beam. Since the emission of the laser beam is controlled in accordance with the data to be recorded, phase-change recording is carried out to record the data onto the disc 1.

In addition, in such a recording operation, the address generating/fetching circuit 39 generates an address to be recorded as data instead of the one to be recorded as wobbling information in accordance with control executed by the controller 41, outputting the address to the recording/playback circuit 36.

The recording/playback circuit 36 adds this address to the data to be recorded and outputs the data to the laser driver 40 in order to record the address onto the disc 1 as data.

In the playback and recording operations described above, various kinds of processing such as various kinds of servo control, extraction of data required in processing and generation of a clock signal are carried out.

First of all, the servo circuit 42 generates a variety of servo control signals for focus, tracking and sled servos based on the focus-error and tracking-error signals received from the RF/processing circuit 34, supplying the servo control signals to a 2-axial drive 43 and a sled drive 44.

The 2-axial drive 43 drives a focus coil and a tracking coil employed in a 2-axial mechanism 53 in the pickup 32 in accordance with a focus control signal and a tracking control signal respectively. Accordingly, a tracking-servo operation and a focus-servo operation are carried out by the 2-axial mechanism 53.

In addition, the sled drive 44 drives a sled mechanism 33 in accordance with a sled control signal. The sled mechanism 33 includes a mechanism comprising components such as a main shaft for holding the pickup 32, a sled motor and a transmission gear which are not shown in the figure. The sled drive 44 drives a sled motor to slide the pickup 32 by a required distance.

In addition, a servo circuit 42 turns off a servo loop in accordance with a command issued by the controller 41, applying drives signals to the 2-axial drive 43 and the sled drive 44 in order to carry out necessary operations such as a track jump/access operation and a focus search operation for pulling the focus servo.

In addition, during recording and playback operations, the RF/processing circuit 34 supplies a signal including a track wobbling component SWB and a fine-clock-mark component SFCM is supplied to a separation circuit 47 as a push-pull signal.

The separation circuit 47 separates the track wobbling component SWB and the fine-clock-mark component SFCM from the push-pull signal. The track wobbling component SWB is supplied to a multiplier 49 and the address detecting circuit 48 whereas the fine-clock-mark component SFCM is fed to a PLL circuit 46.

The PLL circuit 46 makes the fine-clock-mark component SFCM follow a reference signal generated by a crystal oscillator, generating a CAV rotation servo signal. To put it in detail, as described earlier, a fine-clock-mark signal representing a mark of a rotational angular position recorded on the disc 1 is used as information indicating the present rotational speed of the disc 1, generating a CAV rotation servo signal according to a difference in phase from the reference signal.

This CAV rotation servo signal is supplied to a spindle-motor drive 45.

The spindle-motor drive 45 typically applies a 3-phase signal to a spindle motor 31 in accordance with the CAV rotation servo signal, causing the spindle motor 31 to rotate at a CLV.

It should be noted that the spindle-motor drive 45 also carries out operations such as activation, halting, acceleration and deceleration of the spindle motor 31 in accordance with a spindle kick/brake control signal generated by the controller 41.

Receiving the track wobbling component SWB from the separation circuit 47, an address detecting unit 48 carries out demodulation to extract wobbling information, that is, address information expressed as wobbling. The address information is supplied to the controller 41.

Receiving the track wobbling component SWB from the separation circuit 47, the multiplier 49 which is typically implemented by a PLL circuit multiplies the track wobbling component SWB by an integer such as the number 9.

In a recording operation, a signal output by the multiplier 49 is used as a recording clock signal WCK. In a playback operation, on the other hand, a signal output by the multiplier 49 is used as a playback clock signal PBCK. The signal output by the multiplier 49 is supplied to the controller 41 and the recording/playback circuit 36.

That is to say, in a recording operation, the recording/playback circuit 36 encodes data on the basis of the recording clock signal WCK received from the multiplier 49. In a playback operation, on the other hand, the recording/playback circuit 36 decodes data on the basis of the playback clock signal PBCK received from the multiplier 49.

The recording/playback apparatus implemented by this embodiment has the following characteristics and merits.

In the first place, when viewed as a recording apparatus, the CAV rotation control of the spindle motor 31 comprises the steps of extracting information on fine clock marks on tracks, generating a CAV rotation servo signal and driving the disc 1 into rotation at a constant angular speed.

That is to say, by executing rotation control based on a rotational-angle signal obtained from the disc itself, the CAV rotation can be realized with a very high degree of precision.

In addition, it is easy to execute servo control to rotate the spindle motor 31 at a CAV in comparison with control to rotate the motor 11 at a CLV (Constant Linear Velocity). Thus, the configuration of the servo system employed in the recording apparatus can also be made simple as well.

Furthermore, since CAV rotation control is executed by using the fine-clock-mark component SFCM as described above, it is no longer necessary to provide a rotation detecting mechanism (a motor index such as an FG) for detecting the rotation of the spindle motor 31. The elimination of such a rotation detecting mechanism contributes to the simplification of the configuration.

Moreover, the recording clock signal WCK is generated on the basis of the wobbling information component SWB. This is because it is possible to generate the recording clock signal WCK for encoding CLD data by simple multiplication using the multiplier 49 due to the fact that the wobbling waveform is formed at a CLD as described above.

On the top of that, the configuration of a circuit system for generating the recording clock signal WCK can be made very simple. In addition, since the generated recording clock signal WCK is based on tracks (wobbling) on the disc 1, the signal WCK is most suitable for recording of data onto the disc 1. That is to say, by using this recording clock signal WCK, it is possible to record data onto the disc 1 with the highest degree of precision.

Furthermore, the disc 1 is designed so that the amount of mutual wobbling interference between tracks adjacent to each other and, hence, the number of beats, can be reduced to a minimum as described above, and wobbling and rotational-angle marks do not affect each other. Thus, the separation circuit 47 is capable of separating the wobbling-information component SWB from the fine-clock-mark component SFCM with a high degree of precision, and the wobbling-information component SWB and the fine-clock-mark component SFCM themselves are each a high-quality signal.

As a result, the precision of the CAV control based on the fine-clock-mark component SFCM, the precision of extraction of an address from the wobbling-information component SWB by the address detecting unit 48 and the precision of the recording clock signal WCK generated by the multiplier 49 are further improved.

In addition, the fact that CLD wobbling is formed on the disc 1 indicates that the recording/playback apparatus is also suitable for an application to update data at random.

To put it in detail, in an operation to update 1 block existing on a disc 1, it is possible to well sustain time continuity of a block of the past and a present block. As a result, the recording precision of the operation to update data and the precision of an operation to play back data can be improved.

Next, consider the recording/playback apparatus as a playback apparatus. Also in this case, the CAV rotation control of the spindle motor 31 comprises the steps of extracting information on fine clock marks on tracks, generating a CAV rotation servo signal and driving the disc 1 into rotation at a constant angular speed.

Thus, much like the recording operation, by executing rotation control based on a rotational-angle signal obtained from the disc itself, the CAV rotation can be realized with a very high degree of precision. In addition, it is easy to execute servo control to rotate the spindle motor 31 at a CAV in comparison with control to rotate the motor 11 at a CLV (Constant Linear Velocity). Thus, the configuration of the servo system employed in the playback apparatus can also be made simple as well. Furthermore, as is the case with the recording/playback apparatus considered as a recording apparatus, since CAV rotation control is executed by using the fine-clock-mark component SFCM as described above, it is no longer necessary to provide a rotation detecting mechanism (a motor index such as an FG) for detecting the rotation of the spindle motor 31. The elimination of such a rotation detecting mechanism contributes to the simplification of the configuration.

Moreover, the playback clock signal PBCK is generated on the basis of the wobbling information component SWB. This is because it is possible to generate the playback clock signal PBCK for decoding CLD data recorded on the disc 1 by simple multiplication using the multiplier 49 due to the fact that the wobbling waveform is formed at a CLD as described above.

On the top of that, the configuration of a circuit system for generating the playback clock signal PBCK can be made very simple. In addition, since the generated playback clock signal PBCK is based on tracks (wobbling) on the disc 1, the signal PBCK is most suitable for playing-back of data onto the disc 1. That is to say, by using this playback clock signal PBCK, it is possible to play back data from the disc 1 with the highest degree of precision. That is to say, it is possible to carry out a playback operation on the disc 1 with the highest degree of precision. This characteristic is particularly striking for an operation to play back data, which was recorded by using the recording apparatus, by means of the playback apparatus. That is to say, by using a clock signal based on wobbling in both recording and playback operations, the precision of the clock signal can be assured to be very high and, hence, the precision and the quality of playback data can also be assured to be highest.

Furthermore, the disc 1 used in playback operations is also designed so that the amount of mutual wobbling interference between tracks adjacent to each other and, hence, the number of beats, can be reduced to a minimum as described above, and wobbling and rotational-angle marks do not affect each other. Thus, the separation circuit 47 is capable of separating the wobbling-information component SWB from the fine-clock-mark component SFCM with a high degree of precision and, hence, the wobbling-information component SWB and the fine-clock-mark component SFCM themselves are each a high-quality signal. As a result, the precision of the CAV control based on the fine-clock-mark component SFCM, the precision of extraction of an address from the wobbling-information component SWB by the address detecting unit 48 and the precision of the recording clock signal WCK generated by the multiplier 49 are further improved.

It should be noted that it is also possible to obtain a playback clock signal PBCK synchronized with data played back from the disc 1 by typically supplying the data to a PLL circuit employed in the recording/playback circuit 36.

It is worth noting, however, that it is better to generate a playback clock signal PBCK from the wobbling-information component SWB if the precision of the playback clock signal PBCK is to be taken into consideration seriously.

By the way, by using a DVD-ROM drive, it is possible to play back data from the disc 1 which was recorded thereon by means of the recording/playback apparatus.

Normally, the DVD-ROM drive reads out CLD data from a disc rotated at a CLV. Thus, since CLD data is recorded on a disc implemented by the embodiments, merely fine clock marks can be ignored during a playback operation without raising any problem.

In addition, in the DVD-ROM drive, data read out from a disc is supplied to a PLL circuit and, in order to obtain a generation clock signal PBCK synchronized with the data, information of a wobbling track is not used without raising any problems.

That is to say, the discs and the recording/playback apparatus implemented by the embodiments retain compatibility with the ordinary DVD-ROM drive.

So far, embodiments implementing discs and a cutting apparatus as well as a recording/playback apparatus for the discs have been explained. It should be noted that the scope of the present invention is not limited to the embodiments.

In addition, while the discs implemented by the embodiments each have a track with a spiral shape, the present invention can also be implemented as a disc having concentric tracks.

Moreover, in the case of a disc divided into a plurality of zones in the radial direction with CLD data recorded in each of the zones, CLD wobbling can be implemented in each of the zones.

## Claims

1. A disc recording medium (1) wherein a circular track (TK) is created in advance to be used for recording data as a groove (GV) or a land (L);

   said track (TK) is wobbled to contain approximately fixed number of wobbling periods as counted in a longitudinal direction of said track (TK); and
   said track (TK) includes rotational-angle marks each showing a predetermined rotational angular position on said disc recording medium (1).

2. A disc recording medium (1) according to claim 1, wherein there is set a rotational angular position at which a phase relation between wobbling waveforms of two tracks (TK) adjacent to each other is fixed.

3. A disc recording medium (1) according to claim 2, wherein said phase relation is set at a predetermined rotational angular position so that a difference in phase between wobbling waveforms of two tracks (TK) adjacent to each other at said rotational angular position is 0°, 180°, 90° or 270°.

4. A disc recording medium (1) according to claim 1, wherein the number of wobbling periods included in a track circle is set at an integer N or said integer N plus 0.5.

5. A disc recording medium (1) according to claim 4, wherein said integer N is an even integer.

6. A disc recording medium (1) according to claim 4, wherein said integer N is an odd integer.

7. A disc recording medium (1) according to claim 1, wherein the number of wobbling periods in a specific track circle is set at N + (m/4) where N is an integer representing the number of wobbling periods in another track circle adjacent to said specific track circle on the inner side of said specific track circle and m is an integer.

8. A disc recording medium (1) according to claim 1, wherein each track (TK) are added with said rotational-angle mark showing said rotational angular position at which a phase relation between wobbling waveforms of two tracks (TK) adjacent to each other is fixed.

9. A disc recording medium (1) according to claim 8, wherein said phase relation is set at a predetermined rotational angular position, so that a difference in phase between wobbling waveforms of tracks (TK) adjacent to each other at said rotational angular position is 0°, 180°, 90°or 270°.

10. A disc recording medium (1) according to claim 8, wherein said rotational-angle mark is formed by wobbling with an amplitude larger than a wobbling basic amplitude.

11. A disc recording medium (1) according to claim 8, wherein said rotational-angle mark is formed by wobbling with a wavelength smaller than a wobbling basic wavelength.

12. A disc recording medium (1) according to claim 8, wherein said rotational-angle mark is formed as a pit on said track (TK).

13. A recording apparatus for recording data onto a disc recording medium (1) wherein a circular track (TK) is created in advance to be used for recording data as a groove (GV) or a land (L), said track is wobbled by a wobbling waveform to contain wobbling periods at approximately constant linear density, and a rotational-angle mark showing a predetermined rotational angular position of said disc recording medium is formed on said track (TK), said recording apparatus comprising:

   a head means (32) for extracting information conveyed by a beam reflected by said disc recording medium (1) and recording data onto said disc recording medium (1);
   a rotation driving means (31) for extracting information on said rotational-angle mark on said track (TR) from said information conveyed by said reflected beam to generate a rotation control signal and driving said disc recording medium (1) into rotation at a constant angular velocity;
   a recording-clock generating means for generating a recording clock signal based on wobbling information of said track extracted from said information conveyed by said reflected beam; and
   a recording-data processing means (36) for encoding data on the basis of said recording clock signal and supplying encoded data to said head means to be recorded onto said disc recording medium.

14. A playback apparatus for playing back data from a disc recording medium (1) wherein a circular track (TK) is created in advance to be used for recording data as a groove (GV) or a land (L), said track (TK) is wobbled by a wobbling waveform to contain wobbling periods at approximately constant linear density, and a medium rotational-angle mark showing a predetermined rotational angular position on said disc recording medium (1) is formed on said track (TK), said playback apparatus comprising:

a head means (32) for extracting information conveyed by a beam reflected by said disc recording medium (1);

a rotation driving means (31) for extracting information on said rotational-angle mark on said track (TK) from said information conveyed by said reflected beam to generate a rotation control signal and driving said disc recording medium (1) into rotation at a constant angular velocity;

a playback-clock generating means for generating a playback clock signal based on wobbling information of said track extracted from said information conveyed by said reflected beam; and

a playback-data processing means (36) for decoding data extracted from said information conveyed by said reflected beam on the basis of said playback clock signal and outputting decoded data.

# F I G . I

| TRACK PITCH Tp (μm) | MINIMUM PIT LENGTH T (μm) | WOBBLE PERIOD Lw (=2π Tp) | Lw / T | EXTRACTION |
|---|---|---|---|---|
| 0. 708 | 0. 13936 | 4. 44851 | 31. 92183 | |
| 0. 709 | 0. 13916 | 4. 45479 | 32. 01207 | ○ |
| 0. 710 | 0. 13896 | 4. 46107 | 32. 10244 | |
| | | | | |
| 0. 719 | 0. 13722 | 4. 51762 | 32. 92146 | |
| 0. 720 | 0. 13703 | 4. 52390 | 33. 01310 | ○ |
| 0. 721 | 0. 13684 | 4. 53019 | 33. 10486 | |
| | | | | |
| 0. 730 | 0. 13516 | 4. 58674 | 33. 93650 | |
| 0. 731 | 0. 13497 | 4. 59302 | 34. 02954 | ○ |
| 0. 732 | 0. 13479 | 4. 59930 | 34. 12270 | |
| | | | | |
| 0. 741 | 0. 13315 | 4. 65585 | 34. 96695 | |
| 0. 742 | 0. 13297 | 4. 66213 | 35. 06139 | ○ |
| 0. 743 | 0. 13279 | 4. 66842 | 35. 15596 | |
| | | | | |
| 0. 751 | 0. 13138 | 4. 71868 | 35. 91709 | |
| 0. 752 | 0. 13120 | 4. 72497 | 36. 01281 | ○ |
| 0. 753 | 0. 13103 | 4. 73125 | 36. 10865 | |

REFERENCE | 0. 740 | 0. 1333 | 4. 64957 | 34. 87300 |

# F I G. 2

| | Lw/T | TRACK PITCH Tp | MINIMUM PIT LENGTH T | REFERENCE RADIUS mm (REFERENCE CIRCUMFERENCE) | WOBBLE PERIOD Lw | NUMBER OF WOBBLES (N) OF REFERENCE RADIAL POSITION (TKO) | NUMBER OF PHASE SYNCHRONIZATIONS (0°, 180°) | WOBBLE-COUNT INCREMENT |
|---|---|---|---|---|---|---|---|---|
| 32T SYSTEM | 32.000 | 0.709 | 0.1392 | 23.95 (150.4826) | 32T (=4.454) | 33780.0 | 2 | +1 |
| | 16.000 | | | | 16T (=2.227) | 67560.0 | 4 | +2 |
| | 8.000 | | | | 8T (=1.113) | 135120.0 | 8 | +4 |
| REFERENCE | 34.873 | 0.740 | 0.1333 | 24.00 | – | – | – | – |
| 35T SYSTEM | 35.000 | 0.742 | 0.1329 | 24.04 (151.0481) | 35T (=4.6515) | 32400.0 | 2 | +1 |
| | 10.000 | | | | 10T (=1.329) | 113400.0 | 7 | +3.5 |
| 36T SYSTEM | 36.000 | 0.752 | 0.1313 | 24.04 (151.0481) | 36T (=4.725) | 31968.0 | 1 | +1 |
| | 18.000 | | | | 18T (=2.3634) | 63936.0 | 4 | +2 |
| | 12.000 | | | | 12T (=1.5756) | 95904.0 | 6 | +3 |
| | 9.000 | | | | 9T (=1.1813) | 127872.0 | 8 | +4 |

F I G . 3

12 O'CLOCK

FCM

WN   WN+1 WN+2   WI   TK3

WN   WN+1   WI   TK2

WN   WI   TKI

FCM   WI   TKO

Lw

FCM

9 O'CLOCK

3 O'CLOCK

FCM

FCM

FCM

6 O'CLOCK

Lw = 4. 725μm
   = 36. 000T
T = 0. 1313
N = 31968. 0

EP 1 001 409 A2

F I G. 4A

12 O'CLOCK

FCM

W

F I G. 4B

FCM

W

F I G. 4C

3

2

FCM

3

W

# FIG.5A

W

FCM

# FIG.5B

W

FCM

# FIG.5C

FCM

W

# FIG.5D

W

FCM

FIG.6

PHASE DIFFERENCE 0°

PHASE DIFFERENCE 180°

# F I G.7

| TRACK NUMBER | RADIAL POSITION (mm) | TOTAL LENGTH (mm) | NUMBER OF INCLUDED WOBBLE WAVES | |
|---|---|---|---|---|
| TK 0 | 24. 040000 | 151. 0481280 | 31968. 0 | (=N) |
| TK 1 | 24. 040752 | 151. 0528530 | 31969. 0 | |
| TK 2 | 24. 041504 | 151. 0575779 | 31970. 0 | |
| TK 3 | 24. 042256 | 151. 0623029 | 31971. 0 | |
| TK 4 | 24. 043008 | 151. 0670279 | 31972. 0 | |
| TK 5 | 24. 043760 | 151. 0717528 | 31973. 0 | |
| TK 6 | 24. 044512 | 151. 0764778 | 31974. 0 | |
| TK 7 | 24. 045264 | 151. 0812028 | 31975. 0 | |
| TK 8 | 24. 046016 | 151. 0859277 | 31976. 0 | |
| TK 9 | 24. 046768 | 151. 0906527 | 31977. 0 | |
| TK 1 0 | 24. 047520 | 151. 0953777 | 31978. 0 | |
| TK 1 1 | 24. 048272 | 151. 1001026 | 31979. 0 | |
| TK 1 2 | 24. 049024 | 151. 1048276 | 31980. 0 | |
| TK 1 3 | 24. 049776 | 151. 1095526 | 31981. 0 | |
| TK 1 4 | 24. 050528 | 151. 1142775 | 31982. 0 | |
| TK 1 5 | 24. 051280 | 151. 1190025 | 31983. 0 | |
| TK 1 6 | 24. 052032 | 151. 1237275 | 31984. 0 | |
| TK 1 7 | 24. 052784 | 151. 1284524 | 31985. 0 | |
| TK 1 8 | 24. 053536 | 151. 1331774 | 31986. 0 | |
| TK 1 9 | 24. 054288 | 151. 1379024 | 31987. 0 | |
| TK 2 0 | 24. 055040 | 151. 1426273 | 31988. 0 | |
| | | | | |
| TK 4 5 1 5 5 | 57. 996560 | 364. 4039858 | 77123. 0 | |
| TK 4 5 1 5 6 | 57. 997312 | 364. 4087108 | 77124. 0 | |
| TK 4 5 1 5 7 | 57. 998064 | 364. 4134357 | 77125. 0 | |
| TK 4 5 1 5 8 | 57. 998816 | 364. 4181607 | 77126. 0 | |
| TK 4 5 1 5 9 | 57. 999568 | 364. 4228857 | 77127. 0 | |
| TK 4 5 1 6 0 | 58. 000320 | 364. 4276106 | 77128. 0 | |
| TK 4 5 1 6 1 | 58. 001072 | 364. 4323356 | 77129. 0 | |

F I G. 8

$Lw = 2.3634 \mu m$
$= 18.000T$
$T = 0.1313$
$N = 63936.0$

# F I G. 9

| TRACK NUMBER | RADIAL POSITION (mm) | TOTAL LENGTH (mm) | NUMBER OF INCLUDED WOBBLE WAVES |  |
|---|---|---|---|---|
| TK 0 | 24.040000 | 151.0481280 | 63936.0 | (=N) |
| TK 1 | 24.040752 | 151.0528530 | 63938.0 | |
| TK 2 | 24.041504 | 151.0575779 | 63940.0 | |
| TK 3 | 24.042256 | 151.0623029 | 63942.0 | |
| TK 4 | 24.043008 | 151.0670279 | 63944.0 | |
| TK 5 | 24.043760 | 151.0717528 | 63946.0 | |
| TK 6 | 24.044512 | 151.0764778 | 63948.0 | |
| TK 7 | 24.045264 | 151.0812028 | 63950.0 | |
| TK 8 | 24.046016 | 151.0859277 | 63952.0 | |
| TK 9 | 24.046768 | 151.0906527 | 63954.0 | |
| TK 10 | 24.047520 | 151.0953777 | 63956.0 | |
| TK 11 | 24.048272 | 151.1001026 | 63958.0 | |
| TK 12 | 24.049024 | 151.1048276 | 63960.0 | |
| TK 13 | 24.049776 | 151.1095526 | 63962.0 | |
| TK 14 | 24.050528 | 151.1142775 | 63964.0 | |
| TK 15 | 24.051280 | 151.1190025 | 63966.0 | |
| TK 16 | 24.052032 | 151.1237275 | 63968.0 | |
| TK 17 | 24.052784 | 151.1284524 | 63970.0 | |
| TK 18 | 24.053536 | 151.1331774 | 63972.0 | |
| TK 19 | 24.054288 | 151.1379024 | 63974.0 | |
| TK 20 | 24.055040 | 151.1426273 | 63976.0 | |
| | | | | |
| TK 45155 | 57.996560 | 364.4039858 | 154246.0 | |
| TK 45156 | 57.997312 | 364.4087108 | 154248.0 | |
| TK 45157 | 57.998064 | 364.4134357 | 154250.0 | |
| TK 45158 | 57.998816 | 364.4181607 | 154252.0 | |
| TK 45159 | 57.999568 | 364.4228857 | 154254.0 | |
| TK 45160 | 58.000320 | 364.4276106 | 154256.0 | |
| TK 45161 | 58.001072 | 364.4323356 | 154258.0 | |

# F I G. 10

FIG.11

12 O'CLOCK

WN+2
WN WN+1 WI
FCM FCM TK3
WN WN+1 WI TK2
WN WI TK1
FCM WI TKO

9 O'CLOCK
FCM FCM
Lw
3 O'CLOCK

FCM

6 O'CLOCK

Lw = 1.1813 μm
= 9.000T
T = 0.1313
N = 12872.0

EP 1 001 409 A2

F I G. 12

12 O'CLOCK

WN+10

FCM

WN+7  WI  TK3

W

WN+3  WI  TK2

FCM

WN  WI  TKI

FCM

FCM  WI  TKO

Lw = 1.329μm
= 10T
T = 0.1329
N = 113400

9 O'CLOCK

FCM

FCM  3 O'CLOCK

FCM

FCM

FCM

6 O'CLOCK

EP 1 001 409 A2

# F I G .13

| TRACK NUMBER | RADIAL POSITION (mm) | TOTAL LENGTH (mm) | NUMBER OF INCLUDED WOBBLE WAVES | |
|---|---|---|---|---|
| TK0 | 24.040000 | 151.0481280 | 113400.0 | (=N) |
| TK1 | 24.040742 | 151.0527901 | 113403.5 | |
| TK2 | 24.041484 | 151.0574523 | 113407.0 | |
| TK3 | 24.042226 | 151.0621144 | 113410.5 | |
| TK4 | 24.042968 | 151.0667765 | 113414.0 | |
| TK5 | 24.043710 | 151.0714387 | 113417.5 | |
| TK6 | 24.044452 | 151.0761008 | 113421.0 | |
| TK7 | 24.045194 | 151.0807629 | 113424.5 | |
| TK8 | 24.045936 | 151.0854251 | 113428.0 | |
| TK9 | 24.046678 | 151.0900872 | 113431.5 | |
| TK10 | 24.047420 | 151.0947493 | 113435.0 | |
| TK11 | 24.048162 | 151.0994115 | 113438.5 | |
| TK12 | 24.048904 | 151.1040736 | 113442.0 | |
| TK13 | 24.049646 | 151.1087357 | 113445.5 | |
| TK14 | 24.050388 | 151.1133979 | 113449.0 | |
| TK15 | 24.051130 | 151.1180600 | 113452.5 | |
| TK16 | 24.051872 | 151.1227222 | 113456.0 | |
| TK17 | 24.052614 | 151.1273843 | 113459.5 | |
| TK18 | 24.053356 | 151.1320464 | 113463.0 | |
| TK19 | 24.054098 | 151.1367086 | 113466.5 | |
| TK20 | 24.054840 | 151.1413707 | 113470.0 | |
| | | | | |
| TK45155 | 57.545010 | 361.5668068 | 271442.5 | |
| TK45156 | 57.545752 | 361.5714690 | 271446.0 | |
| TK45157 | 57.546494 | 361.5761311 | 271449.5 | |
| TK45158 | 57.547236 | 361.5807932 | 271453.0 | |
| TK45159 | 57.547978 | 361.5854554 | 271456.5 | |
| TK45160 | 57.548720 | 361.5901175 | 271460.0 | |
| TK45161 | 57.549462 | 361.5947796 | 271463.5 | |

# F I G . 14

PHASE DIFFERENCE 0°

TK(n+1)

W     FCM

TK(n)

W     FCM

PHASE DIFFERENCE 180°

TK(n+1)

FCM

W

TK(n)

W     FCM

EP 1 001 409 A2

FIG.15

FIG. 16

Lw = 2.3634 μm
   = 18.000T
T = 0.1313
N = 63936.0

EP 1 001 409 A2

F I G. 17

12 O'CLOCK

9 O'CLOCK

3 O'CLOCK

6 O'CLOCK

FCM
WN+2 W1
WN+1 W1
WN W1
W1
TKO
Lw
TK1
TK2
TK3

Lw = 1.1813μm
    = 9.000T
T = 0.1313
N = 12872.0

EP 1 001 409 A2

EP 1 001 409 A2

F I G . 18

Lw = 1.329μm
    = 10T
T = 0.1329
N = 113400

# F I G. 19

GV     GV     GV     GV

PM     PM     PM

12 O'CLOCK

L     L     L     L

# F I G. 20

GV     GV     GV     GV

PM     PM

12 O'CLOCK

L     L     L     L

# FIG. 21

EP 1 001 409 A2

FIG. 22

# F I G.23A

# F I G.23B

41

# F I G. 24A

# F I G. 24B